**Europäisches Patentamt**

(19) **European Patent Office**

**Office européen des brevets**

(11) Veröffentlichungsnummer: **0 010 775**
**A1**

# (12) EUROPÄISCHE PATENTANMELDUNG

(21) Anmeldenummer: **79104316.9**

(22) Anmeldetag: **05.11.79**

(51) Int. Cl.³: **H 04 N 9/497, H 04 N 9/36**

(30) Priorität: **06.11.78 US 958148**

(43) Veröffentlichungstag der Anmeldung: **14.05.80** Patentblatt 80/10

(84) Benannte Vertragsstaaten: **AT BE CH DE FR GB IT NL SE**

(71) Anmelder: **BASF Aktiengesellschaft, Carl-Bosch-Strasse 38, D-6700 Ludwigshafen (DE)**

(72) Erfinder: **Hjortzberg, Bernhard A., 25213 Terreno Drive, Mission Viejo, CA 92675 (US)**

(54) Verfahren und Anordnungen zum Umsetzen von Farbvideosignalen in ein in PAL-Farbfernsehempfängern dekodierbares Spezial-Farbhilfsträgersignal.

(57) Verfahren und Anordnungen zum Umsetzen von Farb-videosignalen in ein in PAL-Farbfernsehempfängern deko-dierbares Spezial-Farbhilfsträgersignal. Die PAL- oder NTSC-Standard-Farbfernsehsignale werden in einen Über-tragungskanal umgesetzt, insbesondere für die Aufzeich-nen/Wiedergabe von einem Magnetaufzeichnungsträger (TP), und danach in ein in PAL-Farbfernsehempfängern ohne Verzögerungsleitung dekodierbares Spezial-Farb-hilfsträgersignal umgesetzt, das eine spezielle Frequenz (f₁)und einen festen Phasenwinkel von insbesondere 45° besitzt und das eine durch spezielle Kombination der Farbdifferenzsignale (U und V) vorgegebene Amplitude aufweist. Zweckmässige Anordnungen, insbesondere mit doppelsymmetrischen Modulatoren (D1, D2), ermöglichen verschiedene Erzeugungsmöglichkeiten des Spezial-Farb-hilfsträgersignals.

EP 0 010 775 A1

Verfahren und Anordnungen zum Umsetzen von Farbvideosignalen in ein in PAL-Farbfernsehempfängern dekodierbares
Spezial-Farbhilfsträgersignal

Die Erfindung betrifft Verfahren zum Umsetzen eines Farbfernsehsignals mit Quadratur-Farbträger in ein für PAL-Farbfernsehempfänger kompatibles Eingangssignal, wobei der Quadratur-Farbträger die Frequenz $f_c$ aufweist sowie zwei durch
ein erstes und ein zweites Farbdifferenzsignal amplitudenmodulierte Signalkomponenten, die außerdem zueinander quadraturmoduliert sind, umfassend die Verfahrensschritte Umsetzen des Quadratur-Farbträgers in einen Spezial-Farbhilfsträger mit einer Frequenz, die mit einem PAL-Farbfernsehempfänger kompatibel ist und die einen festen Phasenwinkel
X besitzt, der beliebig zwischen $0^\circ$ und $360^\circ$ liegen, jedoch
nicht $0^\circ$, $90^\circ$, $180^\circ$ und $270^\circ$ betragen kann.

Solche Farbfernsehsignale sind allgemein PAL- oder NTSC-
-Standard-Farbfernsehsignale in Europa bzw. in Amerika.

Bei der Videoaufzeichnung eignen sich Fernsehsignale in den
genormten Sendeformaten, so z.B. NTSC oder PAL, nicht
zur Direktaufzeichnung auf Magnet-Aufzeichnungsträger, da
Zeitbasischwankungen, die bei der Wiedergewinnung der
Signale vom Aufzeichnungsträger unvermeidlich auftreten,
untragbares "Übersprechen" zwischen den verschiedenen
Signalkomponenten erzeugen. Videomagnetbandgeräte enthalten
daher gewöhnlich Einrichtungen zur Umwandlung des Sendeformats in ein geeignetes Übertragungskanalformat, sowie zur
Rückumwandlung der Signale in ein Sendeformat, so daß die
aufgezeichnete Information in einem gewöhnlichen Fernsehempfänger wiedergegeben werden kann. Vorliegende Erfindung
befaßt sich in erster Linie mit derartigen Geräten zum Gebrauch in Fällen, in denen das ursprünglich empfangene
(aufzuzeichnende) Signal entweder ein NTSC- oder PAL-Format besitzt und der zur Wiedergabe der aufgezeichneten Signale verwendete Empfänger ein PAL-Empfänger ist.

Grundsätzlich wird festgestellt, daß sowohl Farbfernsehsignale im NTSC-Format als auch solche im PAL-Format ein Basisband-Luminanzsignal, einen Audiosignalträger und einen quadraturmodulierten Farbträger umfassen. Im Falle der NTSC-Signale enthält der Farbträger eine Komponente mit Phasenwinkel $+33°$, die mit einem ersten Farbsignal Q moduliert ist, und eine Quadraturkomponente mit Phasenwinkel $+123°$, die mit einem zweiten Farbsignal I moduliert ist. Die Signale Q und I werden aus Farbdifferenzsignalen B-Y und R-Y gewonnen, wobei B die Farbe Blau und R die Farbe Rot präsentiert und Y ein Luminanzsignal gemäß folgender Gleichungen darstellt:

$$Q = 0.41(B-Y) + 0.48(R-Y)$$
$$I = -0.27(B-Y) + 0.74(R-Y)$$

Demgegenüber umfaßt der Farbträger im PAL-Format eine Komponente mit Phasenwinkel $0°$, die mit Farbdifferenzsignal U moduliert ist, wobei letzteres $0.493(B-Y)$ ist, sowie eine Quadraturkomponente mit einem Phasenwinkel, der in aufeinanderfolgenden Abtastzeilen zwischen $+90°$ und $-90°$ wechselt. Diese Komponente wird von einem Farbdifferenzsignal $V = 0,877(R-Y)$ moduliert.

Farb-Burstsignale die als Phasen- und Frequenzbezugsgrößen für die Quadratur-Farbsignalkomponenten dienen, sind während der Horizontal-Austastlücken vorhanden. NTSC-Bursts besitzen einen Phasenwinkel von $180°$, während PAL-Bursts in aufeinanderfolgenden Zeilen zwischen den Phasenwinkeln $+135°$ und $-135°$ wechseln.

Im US-Patent 4 123 374 ist eine Reihe von Farbfernseh-signal-Kodiervorrichtungen angegeben, die allgemeine Verfahren der oben beschriebenen Art anwenden, um NSTC- oder PAL-Signale zu verarbeiten. Diese bekannten Vorrichtungen umfassen ein Aufzeichnungsteilsystem, mittels welchem ein Fernseheingangssignal für einen Übertragungskanal, z.B. Magnetband, in ein spezielles Übertragungskanalformat umgewandelt wird, und ein Wiedergabeteilsystem zur Rückumwandlung des aus dem Übertragungskanal wiedergewonnenen Signals etwa in sein ursprüngliches Format. Dieses spezielle Übertragungskanalsignalformat für das in den Übertragungskanal eingegebene Fernsehsignal ist für alle bekannten Vorrichtungen dasselbe und umfaßt frequenzmodulierte Luminanz- und Audiosignalträger sowie einen bisequentiellen, frequenzmäßig heruntergesetzten Farbhilfsträger, der auf alternierenden Zeilen mit unterdrückter Trägerfrequenz amplitudenmoduliert ist, und zwar zuerst mit dem Farbdifferenzsignal U und danach mit dem Farbdifferenzsignal V (oder 0.877(R-Y)).

Bei NTSC-Signalen wird der Quadratur-Farbträger zur Wiedergabe dadurch wieder erzeugt, daß der AM-modulierte bisequentielle Farbhilfsräger frequenzmäßig rückumgesetzt wird und die Phasenwinkel zeilensequentiell umgeschaltet werden, um die Quadratur-Modulation wiederherzustellen, so daß zwei mit einem Zeilenabstand aufeinanderfolgende Farbträgerkomponenten erhalten werden. Durch Verzögern der ersten Komponente und Zusammenfassen mit der zweiten Komponente wird der ursprüngliche NTSC-Quadratur-Farbträger wieder erhalten.

Bei der Wiedergabe von PAL-Signalen wird im Prinzip dieselbe Rückumwandlung des Farbhilfsträgers vorgenommen, wobei eine Inverter-/Schalterkombination den Quadratur-Farbträger im PAL-Sinne zeilensequentiell zwischen der Phase $+90^{\circ}$ und $-90^{\circ}$

0010775

umschaltet. Die Farbburstsignale werden wie üblich für NTSC bzw. PAL erzeugt und in die Zeilenaustastbrücken der wiederhergestellten Quadratur-Farbträger eingesetzt.

Ein erster Nachteil der oben diskutierten bekannten Vorrichtungen zur Verarbeitung von PAL-Farbfernsehsignalen ergibt sich aus der Tatsache, daß zur Wiedergewinnung des quadraturmodulierten Farbträgers eine Verzögerungsleitung notwendig ist. Derartige Verzögerungsleitungen verkomplizieren und verteuern die Geräte. Hinzu kommt, daß die Verwendung einer Verzögerungsleitung eine Fehlregistrierung der Luminanz- und Chrominanzinformation in dem von einem üblichen PAL-Farbfernsehempfänger wiedergegebenen Bild ergibt. Dies ist der Fall, da die Hälfte der Farbinformation stets um eine Zeilenperiode verzögert wird, während die Luminanzinformation überhaupt nicht verzögert wird.

Ein zweiter Nachteil der bekannten Vorrichtungen für das Umsetzen von PAL-Signalen bzw. NTSC-Signalen besteht darin, daß die Maximalamplitude des modulierten Farbsignals je nachdem, ob der Farbträger mit dem Differenzsignal V oder U moduliert ist, unterschiedlich groß ist. Bei V wird eine um 3 dB größere Amplitude erhalten als bei U. Dadurch steht beim Differenzsignal U eine nicht ausnutzbare Dynamik zur Verfügung, und ein entsprechend geringerer Rauschabstand ist die Folge der niedrigeren Signalamplitude.

Ein dritter Nachteil der bekannten Vorrichtungen, in denen PAL-Signale verarbeitet werden, ergibt sich aus der Tatsache, daß echte Farbbursts bei quadraturmodulierten Farbträgersignalen nur durch die Addition abgetrennter Bursts erzeugt werden können, die in aufeinanderfolgenden Zeilenaustastlücken des bisequentiell modulierten Farbhilfsträgers auftreten. Ein Burst korrekter Phase wird daher erst

0010775

mit der zweiten Zeile der Farbinformation jedes Halbbildes erzeugt. Die Farbqualität in einem Videobild, das mit Hilfe der Farbwiedergabe eines konventionellen PAL-Fernsehempfängers geliefert wird an den eine derartige Umsetzeinrichtung angeschlossen ist, kann daher ungünstig beeinflußt werden.

Es ist daher Aufgabe der vorliegenden Erfindung, verbesserte und kostengünstigere Verfahren und Anordnungen zum Umsetzen eines Farbfernsehsignals in ein Spezialsignal, das sich zum Empfang und zur Dekodierung in einem konventionellen PAL-Empfänger eignet, bereitzustellen.

Die Aufgabe wird erfindungsgemäß mit einem Verfahren zum Umsetzen eines Farbfernsehsignals mit Quadratur-Farbträger, in ein für PAL-Farbfernsehempfänger kompatibles Eigangssignal, wobei der Quadratur-Farbträger die Frequenz $f_c$, sowie zwei mit einem ersten und einem zweiten Farbdifferenzsignal amplitudenmodulierte Signalkomponenten aufweist, die außerdem zueinander quadraturmoduliert sind, umfassend die Verfahrensschritte umsetzen des Quadratur-Farbträgers in ein Spezial-Farbhilfsträgersignal mit einer Frequenz, die mit einem PAL-Farbfernsehempfänger kompatibel ist und die einen festen Phasenwinkel X besitzt, der beliebig zwischen $0°$ und $360°$ liegen, jedoch nicht $0°$, $90°$, $180°$ und $270°$ betragen kann, gelöst, wenn das Spezial-Farbhilfsträgersignal zeilensequentiell mit dem Signal K (Usin (X) + V cos (X)) bzw. K (U sin (X) - Vcos (X)) amplitudenmoduliert ist, wobei K = +1 ist für Winkel zwischen $0°$ und $90°$ sowie $180°$ und $270°$ und K = -1 ist für Winkel zwischen $90°$ und $180°$ sowie $270°$ und $360°$ und wobei U und V die von den ersten und zweiten Farbdifferenzsignalen abgeleiteten Standard-Farbdifferenzsignale sind, wodurch das Spezial-Farbhilfsträgersignal ohne die Benutzung einer Verzögerungsleitung erzeugbar

ûnd in einem PAL-Farbfernsehempfänger dekodierbar wird, so daß die Standard-Farbdifferenzsignale U und V erhalten werden.

Gemäß der Erfindung enthält das als Spezial-Farbhilfsträgersignal erzeugte Fernsehempfängereingangssignal einen Zwischen-Farbhilfsträger der Frequenz $f_c$ mit einem festen Phasenwinkel X.

Der Spezial-Farbhilfsträger kann, ohne die Verwendung einer Verzögerungsleitung, zur Verzögerung eines Signals um die Dauer einer Zeile erzeugt und in einem herkömmlichen PAL-Empfänger genauso dekodiert werden, als wenn es ein herkömmliches PAL-Empfänger-Eingangssignal wäre.

Dieses Spezial-Farbhilfsträgersignal läßt sich über Amplitudenmodulation eines Bezugssignals mit der Frequenz $f_c$ und mit festem Phasenwinkel X erzeugen, mit einem Basisbandsignal, das abwechselnd K(U sin (X) + V cos (X)) und K (U sin(X)) - V cos (X) proportional ist. Für PAL-Verarbeitungssysteme kann das Basisbandsignal durch die Demodulation des Quadratur-Farbträgers mit Hilfe eines Bezugssignals derselben Frequenz hergestellt werden, das einen bei $+K(90^o-X)$ liegenden festen Phasenwinkel besitzt. Für NTSC-Verarbeitungssysteme läßt sich das Basisbandsignal andererseits durch Demodulation des Quadratur-Farbträgers mit einem kohärenten Bezugssignal herstellen, dessen Phasenwinkel in alternierenden Zeilen zwischen $+K(90^o-X)$ und $-K(90^o-X)$ umgeschaltet ist.

Der Winkel X liegt vorzugsweise bei $+45^o$. Hierdurch wird der Chrominanzteil des von der erfindungsgemäßen Anordnung produzierten Fernsehempfänger-Eingangsignals auf einen Farbhilfsträger reduziert, dessen Phasenwinkel auf $+45^o$ fixiert ist und der mit einem Signal moduliert ist, das abwechselnd zu U + V bzw. U - V proportional ist.

Im einzelnen umfaßt die erfindungsgemäße Anordnung einen Aufzeichnungsteil zum Empfang von Farbfernsehsignalen im PAL-Format und zum Umsetzen in den Zwischen-Farbhilfsträger für den Übertragungskanal. Die Anordnung umfaßt weiterhin einen Wiedergabeteil zur Aufnahme des verschlüsselten, aus dem Übertragungskanal wiedergewonnenen Signals und dessen Umwandlung in das Spezial-Farbhilfsträgersignal, das sich zum korrekten Empfang und zur Dekodierung durch einen herkömmlichen PAL-Empfänger eignet.

In einem Ausführungsbeispiel der Erfindung, in dem ein Fernsehsignal im PAL-Format empfangen und verarbeitet werden kann, umfaßt der Aufzeichnungsteil Empfangseinrichtungen für das PAL-Signal und Einrichtungen zum Abtrennen des Quadratur-Farbträgers von Basisband-Luminanzsignal und vom Audioträgersignal, sowie Demodulatoreinrichtungen zur Reduktion des Farbhilfsträgers auf ein Basisband-Farbsignal. Dieses Basisband-Farbsignal ist eine alternierende Signalfolge, die U + V in einer Zeile und U - V in der nächsten Zeile umfaßt. Es wird durch Mischen des Farbhilfsträgers mit einem Bezugssignal erzeugt, wobei die Frequenz des letzteren dieselbe wie die des Farbträgers ist (nämlich $f_c$) und der Phasenwinkel relativ zu der durch die Farbursts des PAl-Signals festgelegten Bezugsphase auf 45° fixiert wird.

Die Anordnung dieser Ausführungsform umfaßt weiter AM-Modulatoreinrichtungen für den Zwischen-Farbhilfsträger mit dem Basisband-Farbsignal und für dessen Summierung zu den frequenzmodulierten Luminanz- und Audio-Trägersignalen. Zur Erzeugung des kodierten Fernsehsignals zwecks Speicherung mittels des Übertragungskanals. Die Trägerfrequenz $f_t$ wird unterdrückt. Gemäß einer Ausführungsform der Erfindung wird der Zwischen-Farbhilfsträger auf alternierenden Zeilen mit U + V

bzw. U - V moduliert. Die Maximalamplitude des mit U + V modulierten Trägersignals ist nur um etwa 0,5 db größer als die Maximalamplitude im Fall der Modulation mit U + V. Es kann daher während jeder Abtastzeile im wesentlichen die volle Dynamik für die Farbsignalwiedergabe ausgenutzt werden, und der Rauschabstand ist für jede Zeile annähernd gleichgroß.

Außerdem wird die Erstellung korrekter Farbburstsignale für sämtliche Zeilen eines Fernsehbildes erreicht.

Im gleichen Ausführungsbeispiel der Erfindung umfaßt der Wiedergabeteil Empfangseinrichtungen für das aus dem Übertragungskanal wiedergewonnene Fernsehsignal und zur nochmaligen Abtrennung des modulierten Farbhilfsträgers von den Helligkeits- und Audioträgersignalen, sowie Demodulatoreinrichtungen zur Reduktion des abgetrennten Farbhilfsträgers auf ein Basisband-Farbsignal, das mit dem im Aufzeichnungsteil der Anordnung erzeugten Signal identisch ist.

Der Wiedergabeteil umfaßt außerdem Modulatoreinrichtungen zur Umwandlung des Basisbandsignals in ein moduliertes Trägersignal der Frequenz $f_c$ und einem festen Phasenwinkel von $+45°$. Es wird darauf hingewiesen, daß beide Farbsignalkomponenten U und V in jeder Zeile dieses Spezial-Farbhilfsträgersignals vorhanden sind und daß ein herkömmlicher PAL-Farbfernsehempfänger das Spezial-Farbhilfsträgersignal korrekt dekodieren kann, um die beiden Komponenten U und V zu gewinnen. Die Notwendigkeit, einen Quadratur-Farbträger neu zu erzeugen sowie die Notwendigkeit, Mittel zur Verzögerung für die Dauer einer Zeile vorzusehen, fällt daher weg. Hierdurch werden Aufwand und Kosten reduziert und außerdem wird vermieden, daß eine Fehlzuordnung der Helligkeits- und Farbsignale im wiedergegebenen Fernsehbild auftritt.

0010775

Der Wiedergabeteil gemäß dieser Ausführung der Erfindung umfaßt außerdem Summiereinrichtungen für PAL-Farbburtsignale zum modulierten Farbhilfsträger, sowie Einrichtungen zur Addition des resultierenden Signals mit Basisband-Luminanz- und Audio-Trägersignalen, um so ein Spezial-Fernsehsignal zu erzeugen, dessen besonderes Format es zur Modulation eines Trägers sowie zum korrekten Empfang und zur Dekodierung durch einen herkömmlichen PAL-Fernsehempfänger geeignet macht.

In einer anderen Ausführungsform der Erfindung zur Umsetzung eines PAL-Fernsehsignals fallen die Zwischenschritte der Reduktion des Quadratur-Farbträgers und des Zwischen-Farbhilfsträgers im Übertragungskanal in die Basisbandfrequenzlage fort. Stattdessen umfaßt der Aufzeichnungsteil Einrichtungen zum Direktumsetzen des Quadratur-Farbträgers in den Zwischen-Farbhilfsträger des Übertragungskanals, und der Wiedergabeteil enthält Einrichtungen zum Direktumsetzen des Zwischen-Farbhilfsträgers in das Spezial-Farbhilfsträgersignal. Das wird in beiden Fällen mittels Einrichtungen zum Mischen des modulierten Farbhilfsträgers mit einem dritten Bezugssignal erreicht, das durch Mischen eines ersten Bezugssignals der Frequenz $f_t$ mit einem zweiten Bezugssignal der Frequenz $f_c$ entsteht und das eine Phase von $+45^o$ besitzt. Dies dritte Bezugssignal enthält Summen- und Differenzfrequenzen von $f_c$ und $f_t$.

Ansonsten gleicht die Alternativausführung der ersten beschriebenen Ausführungsform. Da also das Aufzeichnungsteil beider Ausführungsformen kodierte Signale liefert, die dasselbe Übertragungskanalformat besitzen, versteht es sich, daß der Aufzeichnungsteil der einen Anordnung mit dem Wiedergabeteil der anderen Anordnung kombiniert werden kann.

Nach einer weiteren Ausführung der erfindungsgemäßen Anordnung zur Umsetzung eines NTSC-Fernsehsignals in das Format des Übertragungskanals, ist der Aufzeichnungsteil
im wesentlichen derselbe wie bei der ersten obenerwähnten
Anordnung für PAL-Signale. Der Hauptunterschied besteht
darin, daß die Phase des den Demodulatoreinrichtungen
zugeführten Bezugssignals keinen festen Phasenwinkel von
+45° besitzt, sondern zeilensequentiell zwischen den
Winkeln +45° und -45° umgeschaltet wird. Auf diese Weise
erzeugen die Demodulatoreinrichtungen ein Basisband-Farbsignal, das eine alternierende Signalfolge enthält, die
in der einen Horizontalzeile der Summe der Farbdifferenzsignale, d.h. U + V, und in der nächsten Zeile der
Differenz, d.h. U - V, proprotional ist. Hierbei handelt
es sich um dasselbe Basisband-Farbsignal, das in der
obenbeschriebenen Ausführungsform der Anordnung erzeugt
wird.

In einer weiteren Ausführungsform der erfindungsgemäßen
Anordnung zum Umsetzen eines Fernsehsignals im NTSC-Format in das Format des Übertragungskanals ist der Aufzeichnungsteil im wesentlichen derselbe wie oben beschrieben. Der Hauptunterschied liegt darin, daß ein den
Mischeinrichtungen zugeführte dritte Bezugssignal gewonnen wird, in dem ein erstes Bezugssignal der Frequenz $f_t$ mit einem zweiten Bezugssignal der Frequenz $f_c$
gemischt wird, wobei dieses zweite Signal auf alternierenden Zeilen zwischen den Phasenwinkeln +45° und -45° umgeschaltet wird. Hierdurch entsteht ein modulierter Zwischen-
-Farbhilfsträger für den Übertragungskanal, der mit den
oben beschriebenen Ausführungen identisch ist.

In allen Ausführungsformen der erfindungsgemäßen Anordnung kann das Sichtbarwerden einer Kreuzmodulation
zwischen Farb- und Helligkeitssignalen im wesentlichen

dadurch vermieden werden, daß $f_t$, also die Frequenz des Zwischen-Farbhilfsträgers im Übertragungskanal, ein ungerades Vielfaches eines Viertels der Zeilenfrequenz oder aber als ungerades Vielfaches der Hälfte der Zeilenfrequenz gewählt wird, wo im letzteren Fall der Phasenwinkel des Farbhilfsträgers in alternierenden Zeilenpaaren umgeschaltet wird.

Im folgenden sind einige praktische Anordnungen näher beschrieben.

Eine erste Anordnung zum Umsetzen eines herkömmlichen PAL-Farbfernsehsignals, das ein Basisband-Helligkeitssignal, ein frequenzmoduliertes Audio-Trägersignal und einen Quadratur-Farbträger umfaßt, dessen Frequenz $f_c$ ist und der mit den Farbdifferenzsignale U und V amplitudenmoduliert ist, in ein spezielles Übertragungskanalformat, das frequenzmodulierte Audio- und Helligkeitsträgersignale sowie einen Zwischen-Farbhilfsträger umfaßt, der eine Frequenz $f_t$ aufweist und auf aufeinanderfolgenden Abtastzeilen abwechselnd mit U + V bzw. U - V amplitudenmoduliert wird, ist durch folgende Einheiten charakterisierbar:

Ein erstes Abtrennfilter zur Abtrennung des Quadratur-Farbträgers vom Rest des PAL-Farbfernsehsignals; erste Einrichtungen zur Erfassung von Farbbursts in den Zeilenaustastlücken des abgetrennten Quadratur-Farbträgers und zur Erzeugung eines ersten Bezugssignals der Frequenz $f_c$ mit einer Phase von einem ungeraden Vielfachen von $+45°$; einen ersten doppelsymmetrischen Modulator zum Mischen des abgetrennten Quadratur-Farbträgers mit dem ersten Bezugssignal, um ein Basisband-Farbsignal zu erzeugen, das auf alternierenden Abtastzeilen U + V bzw. U - V proportional ist;

0010775

Zweite Erzeugungseinrichtungen für ein zweites Bezugssignal der Frequenz $f_t$ mit einer Phase, die in aufeinanderfolgenden Abtastzeilenpaaren ihr Vorzeichen wechselt, wobei die Frequenz $f_t$ ein ungerades Vielfaches der halben der Zeilenfrequenz ist; einen zweiten doppelsymmetrischen Modulator zum Mischen des Basisband-Farbsignals mit dem zweiten Bezugssignal, um den Zwischen-Farbhilfsträger zu erzeugen; Einrichtungen, womit ein zweiter doppelsymmetrischer Modulator während der Dauer der Zeilenaustastlücken unsymmetrisch gemacht werden kann, so daß während dieser Lücken Farbbursts erzeugt und diese Farbbursts eine Frequenz und eine Phase aufweisen, die dem zweiten Bezugssignal entsprechen und die spätere Korrektur von Zeitbasisfehlern im Farbfernsehsignal des Übertragungskanalformats erleichtern; ein zweites Filter zur Beseitigung unerwünschter Modulationskomponenten aus dem Zwischen-Farbhilfsträger, der durch den doppelsymmetrischen Modulator erzeugt wird; Abtrenneinrichtung für das Basisband-Helligkeitssignal vom Rest des PAL-Farbfernsehsignals und zum Umsetzen des abgetrennten Helligkeitssignals in ein frequenzmoduliertes Helligkeitsträgersignal; und eine Summiereinrichtung für den gefilterten Zwischen-Farbhilfsträger, mit dem frequenzmodulierten Helligkeits- und Audio-Trägersignal zwecks Erzeugung des Spezial-Farbhilfsträgersignals.

Eine weitere zweckmäßige Anordnung nach der Erfindung ist im folgenden gegeben:

Eine Anordnung zum Umsetzen eines Farbfernsehsignals im Übertragungskanalformat, das frequenzmodulierte Helligkeits- und Audioträgersignale umfaßt sowie einen Farbhilfsträger einer Frequenz $f_t$, der in aufeinanderfolgenden Abtastzeilen abwechselnd von U + V bzw. U - V amplitudenmoduliert ist, wobei U und V Farbdifferenzsignale

0010775

sind, in ein Spezial-Farbhilfsträgersignal, das von einem herkömmlichen PAL-Farbfernsehempfänger korrekt dekodierbar ist, wobei dieses Spezialsignal ein Basisband-Helligkeitssignal, ein frequenzmoduliertes Audio-Trägersignal und einen Spezial-Farbhilfsträger umfaßt, dessen Frequenz $f_c$ und dessen Phasenwinkel +45° beträgt und der in aufeinanderfolgenden Abtastzeilen abwechselnd mit U + V bzw. U - V amplitudenmoduliert ist, ist charakterisiert durch: erste Filtereinrichtungen zum Abtrennen des Zwischen-Farbhilfsträgers vom Rest des Übertragungskanal--Farbfernsehsignals, sowie erste Erzeugungseinrichtungen für erstes Bezugssignal der Frequenz $f_t$ und einer Phase, wobei diese ersten Signalerzeugungsmittel eine Zeitbasiskorrekturvorrichtung zur variablen Verzögerung des Übertragungskanal-Farbfernsehsignals umfassen, um die Phase während der Zeilenaustastlücken des Fernsehsignals auftretenden Farbbursts der Phasenlage des ersten Bezugssignals anzugleichen; einen ersten doppelsymmetrischen Modulator zur Mischung des abgetrennten Zwischen-Farbhilfsträgers mit dem ersten Bezugssignal, um ein Basisband-Farbsignal zu erzeugen, das in alternierenden Abtastzeilen U + V bzw. U - V proportional ist.

Eine weitere vorteilhafte Anordnung ist im folgenden näher beschrieben.

Eine Anordnung zum Umsetzen eines herkömmlichen PAL-Farbfernsehsignals, das ein Basisband-Helligkeitssignal, ein frequenzmoduliertes Audio-Trägersignal und einen Quadratur-Farbträger einer Frequenz $f_c$, amplitudenmoduliert mit Farbdifferenzsignalen U und V, umfaßt, in ein spezielles Übertragungskanalsignalformat, das frequenzmodulierte Audio- und Helligkeitsträgersignale und einen Zwischen-Farbhilfsträger umfaßt, mit einer Frequenz $f_t$ und in aufeinanderfolgenden Abtastzeilen abwechselnd mit U + V bzw. U - V amplitudenmoduliert, ist gegeben durch

erste Filtereinrichtungen zum Abtrennen des Quadratur-
-Farbhilfsträgers vom Rest des PAL-Farbfernsehsignals;
erste Signalerzeugungsmittel zum Feststellen der Farbbursts in den Zeilenaustastlücken des abgetrennten Quadratur-Farbträgers und zur Erzeugung eines ersten Bezugssignals mit der Frequenz $f_c$ und einer festen Phase,
die ein Vielfaches von $45^o$ beträgt, Auftasteinrichtungen
zum Einsetzen von Farbbursts, die sich über die Dauer der
Zeilenaustastlücken erstrecken und deren Frequenz und
Phase denjenigen des ersten Bezugssignals entsprechen, so
daß eine spätere Korrektur von Zeitbasisfehlern in dem im
Übertragungskanalformat vorliegenden Farbfernsehsignal
erleichtert wird; eine erste Summiereinrichtung zur
Kombination der Farbbursts, die durch die Auftasteinrichtungen erzeugt und eingesetzt werden, mit dem abgetrennten
Quadratur-Farbträger, um einen teilweise umgesetzten
Quadratur-Farbträger zu erzeugen.

Eine weitere praktische Anordnung der Erfindung wird wie
folgt beschrieben.

Eine Anordnung zum Umsetzen eines Farbfernsehsignals im
Übertragungskanalformat, das frequenzmodulierte Hellig-
keits- und Ton-Trägersignale enthält und einen Farbhilfsträger der Frequenz $f_t$ und der in aufeinanderfolgenden
Zeilen abwechselnd mit U + V bzw. U - V amplitudenmoduliert ist, wobei U und V Farbdifferenzsignale sind,
in ein Spezial-Signalformat, das von einem herkömmlichen
PAL-Farbfernsehempfänger entsprechend dekodierbar ist,
wobei dieses Spezial-Signalformat ein Basisband-Helligkeitssignal, ein frequenzmoduliertes Ton-Trägersignal und
einen Zwischen-Farbhilfsträger enthält, dessen Frequenz $f_c$
und dessen Phase $+45^o$ betragen und der in aufeinanderfolgenden Abtastzeilen abwechselnd mit U + V bzw. U - V
amplitudenmoduliert ist, ist erfindungsgemäß gegeben
durch erste Filtereinrichtungen zum Abtrennen des Zwischen-Farbhilfsträgers vom Rest des Übertragungskanal-Farbfernsehsignals; erste Signalquellen zur Erzeugung eines ersten Bezugssignals der Frequenz $f_t$ und einer Phase, die derjenigen des abgetrennten Zwischen-Farbhilfsträgers angeglichen ist, wobei die ersten Signalquellen Einrichtungen zur Korrektur von Zeitbasisfehlern und zur variablen Verzögerung des Übertragungskanal-Farbfernsehsignals enthalten, um die Phasenlage der während der Zeilenaustastlücken des Fernsehsignals auftretenden Farbbursts mit der Phase des ersten Bezugssignals auszurichten; zweite Signalquellen zur Erzeugung eines zweiten Bezugssignals einer Frequenz $f_c$ mit einer Phase von $+45^\circ$; Mischeinrichtungen für das erste Bezugssignal mit dem zweiten Bezugssignal, um ein drittes Bezugssignal zu gewinnen, das Summen- und Differenzfrequenzen von $f_c$ und $f_t$ enthält; einen doppelsymmetrischen Modulator zum Mischen des abgetrennten Zwischen-Farbhilfsträgers mit dem dritten Bezugssignal, um einen Farbhilfsträger zu erzeugen, dessen Frequenz $f_c$ ist und der auf alternierenden Zeilen mit U + V bzw. U - V amplitudenmoduliert ist; dritte Signalquellen zur Erzeugung herkömmlicher PAL-Farbbursts; eine erste Summiereinrichtung zum Summieren der PAL-Farbbursts mit dem vom doppelsymmetrischen Modulator erzeugten Farbhilfsträger, um den Spezial-Farbhilfsträger zu erzeugen; ein zweites Filter zum Aussieben unerwünschter Modulationskomponenten aus dem Spezial-Farbhilfsträger; Abtrennungseinrichtungen für das frequenzmodulierte Helligkeitsträgersignal vom Rest des Übertragungskanal-Farbfernsehsignals und zum Demodulieren des abgetrennten Helligkeitsträgersignals in ein Basisband-Helligkeitssignal, und eine zweite Summiereinrichtung zur Kombination des ausgefilterten Spezial-Farbhilfsträgers, des Basisband-Helligkeitssignals und eines frequenzmodulierten Ton-Trägersignals, um das Spezial-Signalformat zu bilden, das in einem herkömmlichen PAL-Farbfernsehempfänger korrekt dekodierbar ist.

Weitere zweckmäßige Anordnungsmerkmale sind dem folgenden Ausführungsbeispiel der Erfindung entnehmbar.

Eine Anordnung zum Umsetzen eines NTSC-Farbfernsehsignals, das ein Basisband-Helligkeitssignal, ein frequenzmoduliertes Audio-Trägersignal und einen Quadratur-Farbträger umfaßt, dessen Frequenz $f_c$ ist und der mit den Farbdifferenzsignalen I und Q amplitudenmoduliert ist, in ein Spezial-Signalformat, das frequenzmodulierte Audio- und Helligkeitsträgersignale und einen Zwischen-Farbhilfsträger der Frequenz $f_t$ enthält und das in aufeinanderfolgenden Abtastzeilen abwechselnd mit U + V bzw. U − V amplitudenmoduliert ist, wobei die Beziehung zwischen U und V einerseits und I und Q andererseits durch folgende Gleichung dargestellt wird:

$$Q = 0,41 \ U + 0,48 \ V$$
$$I = -0,27 \ U + 0,74 \ V,$$

ist gekennzeichnet durch erste Abtrennfilter zur Abtrennung des Quadratur-Farbträgers vom Rest des NTSC-Farbfernsehsignals; erste Einrichtungen zum Feststellen der Farbbursts in den Zeilenaustastlücken des abgetrennten Quadratur-Farbträgers und zur Erzeugung eines ersten Bezugssignals mit der Frequenz $f_c$ und einer Phase, die in alternierenden Abtastzeilen zwischen +X und -X wechselt, wobei X ein ungerades Vielfaches von +45° ist und wobei diese ersten Einrichtungen einen ersten doppelsymmetrischen Modulator zum Mischen des abgetrennten Quadratur-Farbträgers mit dem ersten Bezugssignal enthält, um ein Basisband-Farbsignal zu erzeugen, das auf alternierenden Abtastzeilen U + V bzw. U − V proportional ist; zweite Einrichtungen zum Herstellen eines zweiten Bezugssignals mit der Frequenz $f_t$ und einer Phase, mit in benachbarten Abtastzeilenpaaren wechselndem Vorzeichen, wobei die Frequenz $f_t$

ein ungerades Vielfaches der Hälfte der Zeilenfrequenz ist; einen zweiten doppelsymmetrischen Modulator zum Mischen des Basisband-Farbsignals mit dem zweiten Bezugssignal zur Erzeugung des Zwischen-Farbhilfsträgers; Einrichtungen, mittels der der zweite doppelsymmetrische Modulator für die Dauer der Zeilenaustastlücken unsymmetrisch gemacht werden kann, so daß Farbbursts während der Austastlücken erzeugt werden, die eine Frequenz und eine Phase besitzen, die denjenigen des zweiten Bezugssignals entsprechen, wodurch die spätere Korrektur von Zeitbasisfehlern im Übertragungskanal-Farbfernsehsignal erleichtert wird; ein zweites Filter zur Beseitigung unerwünschter Modulationskomponenten aus dem Zwischen-Farbhilfsträger, der vom zweiten doppelsymmetrischen Modulator erzeugt wird; Abtrenneinrichtungen für das Basisband-Helligkeitssignal vom Rest des NTSC-Farbfernsehsignals und zur Umwandlung des abgetrennten Helligkeitssignals in einen frequenzmoduliertes Helligkeits-Trägersignal; und Summiereinrichtungen für den ausgefilterten Zwischen-Farbhilfsträger, des frequenzmodulierten Helligkeits-Trägersignals und eines frequenzmodulierten Audioträgersignals um das Spezial-Übertragungskanal-Farbfernsehsignal zu gewinnen.

Eine weitere Ausführung der erfindungsgemäßen Anordnung ist im folgenden wiedergegeben.

Eine Anordnung zum Umsetzen eines NTSC-Farbfernsehsignals, das ein Basisband-Helligkeitssignal, ein frequenzmoduliertes Ton-Trägersignal und einen Quadratur-Farbträger enthält, der eine Frequenz $f_c$ aufweist und der mit den Farbdifferenzsignalen I und Q amplitudenmoduliert ist, in ein Spezial-Signalformat, das frequenzmodulierte Ton- und Helligkeitsträgersignale und einen Zwischen-Farbhilfsträger enthält, mit der Frequenz $f_t$, und der in aufeinanderfolgenden Abtastzeilen abwechselnd mit U + V bzw. U - V amplitudenmo-

uliert ist, wobei die Beziehung zwischen U und V einerseits und I und Q andererseits durch die Gleichung

$$Q = 0,41 \ U + 0,48 \ V$$
$$I = -0,27 \ U + 0,74 \ V$$

gegeben ist, ist gekennzeichnet durch ein erstes Filter
zum Abtrennen des Quadratur-Farbträgers vom Rest des
NTSC-Farbfernsehsignal; erste Einrichtungen zum Feststellen von Farbbursts in den Zeilenaustastlücken des
abgetrennten Quadratur-Farbträgers und zur Erzeugung
eines ersten Bezugssignals mit der Frequenz $f_c$ und einer
Phase, die auf alternierenden Abtastzeilen zwischen +X und
-X umgeschaltet ist, wobei X ein ungerades Vielfaches
von 45° ist; Auftasteinrichtungen zur Erzeugung von Farbbursts über die gesamte Dauer der Zeilenaustastlücken,
wobei diese Bursts eine Frequenz und eine Phase aufweisen,
die denjenigen des ersten Bezugssignals entsprechen und
die eine Korrektur von Zeitbasisfehlern im Farbfernsehsignal des Übertragungskanals erleichtern; eine erste
Summiereinrichtung zur Kombination der von den Auftasteinrichtungen erzeugten Farbbursts mit dem abgetrennten
Quadratur-Farbträger, um einen teilweise umgesetzten
Quadratur-Farbträger zu erzeugen; eine Signalquelle
zur Erzeugung eines zweiten Bezugssignals der Frequenz $f_t$
mit einer Phase, die in benachbarten Paaren aufeinanderfolgender Abtastzeilen ihr Vorzeichen wechselt, wobei die
Frequenz $f_t$ ein ungerades Vielfaches der halben Zeilenfrequenz ist; Mischeinrichtungen für das erste Bezugssignal mit dem zweiten Bezugssignal, zur Bildung eines
dritten Bezugssignals mit Summen- und Differenzfrequenzen
von $f_c$ und $f_t$; einen doppelsymmetrischen Modulator zum
Mischen des teilweise umgesetzten Quadratur-Farbträgers
mit dem dritten Bezugssignal, um den Zwischen-Farbhilfsträger zu gewinnen; ein zweites Filter zur Beseitigung unerwünschter Modulationskomponenten aus dem Zwischen-Farbhilfsträger der vom doppelsymmetrischen Modulator erzeugt wird; Abtrenneinrichtungen für das Basisband-Helligkeitssignal vom Rest des NTSC-Farbfernsehsignals und Umwandlungseinrichtungen für das abgetrennte Helligkeitssignal in ein frequenzmoduliertes Helligkeits-Trägersignal, eine Summiereinrichtung für den gefilterten Zwischen-Farbhilfsträger, für das frequenzmodulierte Helligkeits-Trägersignal und für das frequenzmodulierte Ton-Trägersignal, um das Spezial-Übertragungskanal-Farbfernsehsignal zu erhalten.

Weitere Merkmale und Vorteile der Erfindung gehen aus der nachfolgenden, ausführlicheren Beschreibung von Ausführungsformen erfindungsgemäßer Anordnungen in Verbindung mit den beigefügten Zeichnungen hervor, womit das Prinzip der Erfindung beispielsweise erläutert wird.

In den beigefügten Zeichnungen ist

Figur 1a ein vereinfachtes Blockschaltbild eines erfindungsgemäßen Aufzeichnungsteils, zur Umwandlung eines PAL-Fernsehsignals in das Signalformat eines Übertragungskanals, hier zur Aufzeichnung auf Magnetband;

Figur 1b ist ein vereinfachtes Blockschaltbild eines erfindungsgemäßen Wiedergabeteils, der mit einer Anordnung der Figur 1a betreibbar ist, um das kodierte, vom Magnetband wiedergewonnene Signal in ein Spezialsignalformat umzusetzen, das sich um üblichen Empfang, zur Verarbeitung und Dekodierung in einem PAL-Fernsehempfänger eignet;

Figur 2a ist ein vereinfachtes Blockschaltbild, ähnlich der Figur 1a, stellt jedoch eine Alternativausführung des erfindungsgemäßen Aufzeichnungsteils dar, zum Umsetzen eines Fernsehsignals im PAL-Format in das Format des Übertragungskanals zur Aufzeichnung auf Magnetband;

Figur 2b ist ein vereinfachtes Blockschaltbild eines Wiedergabeteils, der in Verbindung mit der Anordnung der Figur 2a betreibbar ist, um das vom Magnetband wiedergewonnene kodierte Signal in ein Spezial-Signalformat zum üblichen Empfang, zur Verarbeitung und Dekodierung durch einen PAL-Fernsehempfänger geeignet zu machen;

Figur 3 ist ein vereinfachtes Blockschaltbild einer anderen Ausführungsform des erfindungsgemäßen Aufzeichnungsteils zum Umsetzen eines Fernsehsignals im NTSC-Format in das Signalformat des Übertragungskanals (Aufzeichnung auf Magnetband);

Figur 4 ist ein vereinfachtes Blockdiagramm einer weiteren Ausführungsform des erfindungsgemäßen Aufzeichnungsteils, ebenfalls zum Umsetzen eines NTSC-Fernsehsignals in das Signalformat eines Übertragungskanals (Aufzeichnung auf Magnetband);

Figur 5 ist ein vereinfachtes Blockdiagramm, das einen Teil eines PAL-Fernsehempfängers zeigt, zur Verarbeitung eines an seinem Eingang zugeführten, modulierten Farbhilfsträgers, um die beiden Farbdifferenzsignale U und V zu gewinnen;

Figur 6 ist ein Vektordiagramm, das die relativen Phasenwinkel der Komponenten eines Quadratur-Farbträgers im PAL-Format zeigt, mit dem Phasenwinkel eines in den Ausführungsformen der Figuren 1a und 1b verwendeten Bezugssignals, sowie den Phasenwinkeln eines solchen Signals für die Figuren 2a und 2b in gestrichelter Darstellung;

Figur 7 ist ein Vektordiagramm, das die relativen Phasenwinkel der Komponenten eines NTSC-Quadratur-Farbträgers zeigt, mit den Phasenwinkeln eines in den Ausführungsformen der Figuren 3 und 4 gestrichelt dargestellten Bezugssignals

Wie aus den Zeichnungs-Beispielen hervorgeht, ist die Erfindung mit einer Anordnung zu verwirklichen, die einen Aufzeichnungsteil zum Empfang eines Farbfernsehsignals im PAL- oder NTSC-Format besitzt und dies in ein Übertragungskanalsignalformat umsetzt zur Übertragung über einen Übertragungskanal, z.B. Aufzeichnung auf Magnetband, und die außerdem einen Wiedergabeteil aufweist zum Empfang des kodierten, vom Band wiedergewonnenen Signals und zum Umsetzen in ein Spezial-Farbhilfsträgersignal mit PAL--kompatiblen Signalformat zwecks Verarbeitung nach herkömmlichen Verfahren und zur Eingabe in einen herkömmlichen PAL-Fernsehempfänger.

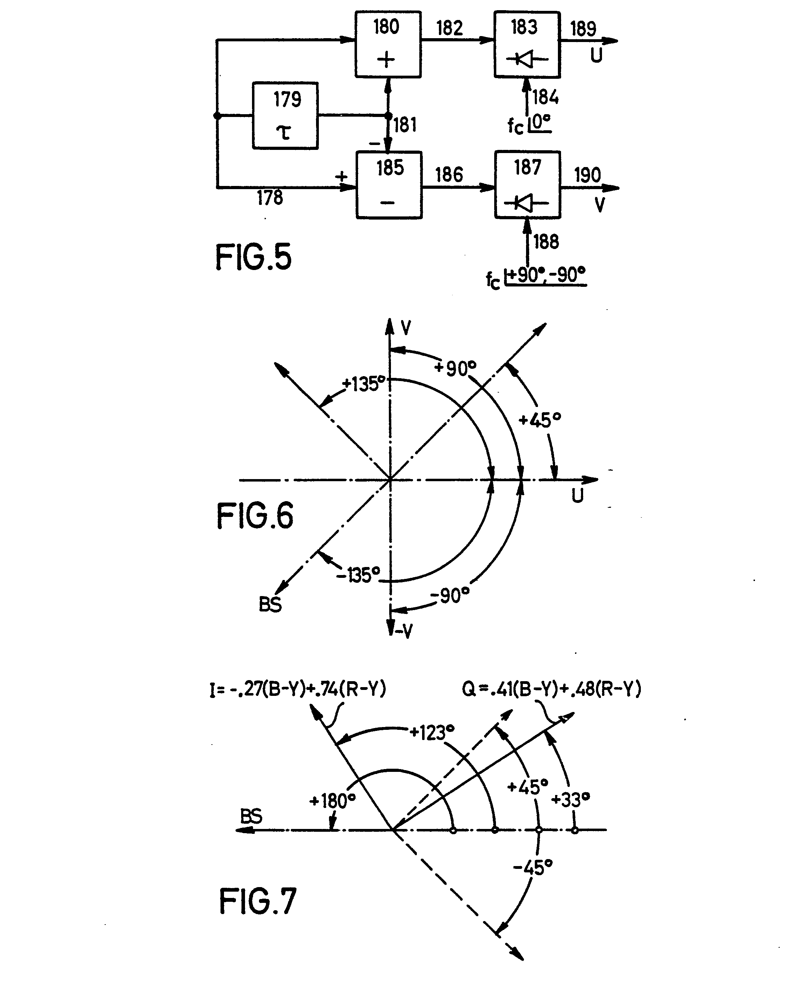

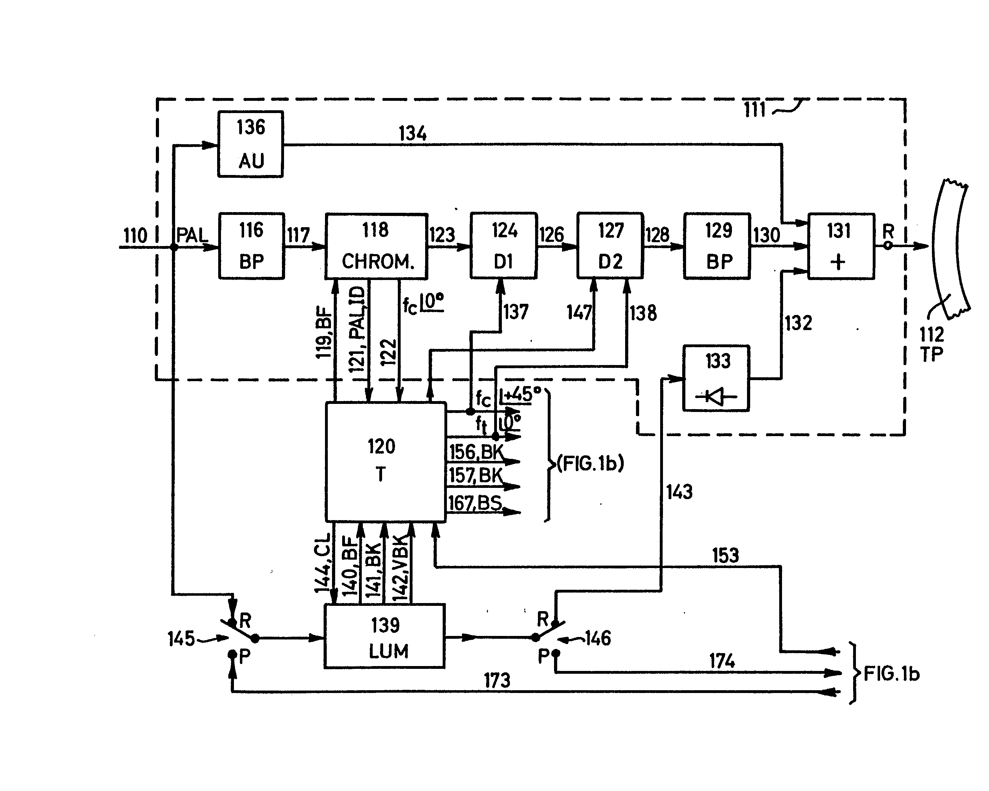

Es wird kurz daran erinnert, daß sowohl NTSC- als auch PAL-Farbfernsehsignale ein Basisband-Luminanzsignal, ein Audio-Trägersignal und einen Quadratur-Farbträger enthalten. Wie in Figur 7 dargestellt, umfaßt der NTSC--Farbträger eine Komponente mit einem Phasenwinkel von $33^{o}$, moduliert mit einem Farbdifferenzsignal Q (d.h. 0,41 (B-Y) + 0,48 (R-Y)), sowie eine Quadraturkomponente mit einem Phasenwinkel von $123^{o}$, moduliert mit einem Farbdifferenzsignal I (d.h. -0,27 (B-Y) + 0,74 (R-Y)). Farbbursts mit einem Phasenwinkel von $180^{o}$ erscheinen während der horizontalen Austastlücken. Wie aus Figur 6 hervorgeht umfaßt der PAL-Farbträger einerseits eine Komponente mit einem Phasenwinkel von $0^{o}$, moduliert durch U (oder 0,493 (B-Y)) und eine Quadraturkomponente mit einem Phasenwinkel, der auf alternierenden Zeilen zwischen $+90^{o}$ und $-90^{o}$ umgeschaltet wird und durch V (oder 0,877 (R-Y)) moduliert wird. Farbbursts mit einem Phasenwinkel von $+135^{o}$, gekennzeichnet durch eine Quadraturkomponente von $+90^{o}$, und von $-135^{o}$, gekennzeichnet durch eine Quadraturkomponente von $-90^{o}$, entstehen während der horizontalen Austastlücken.

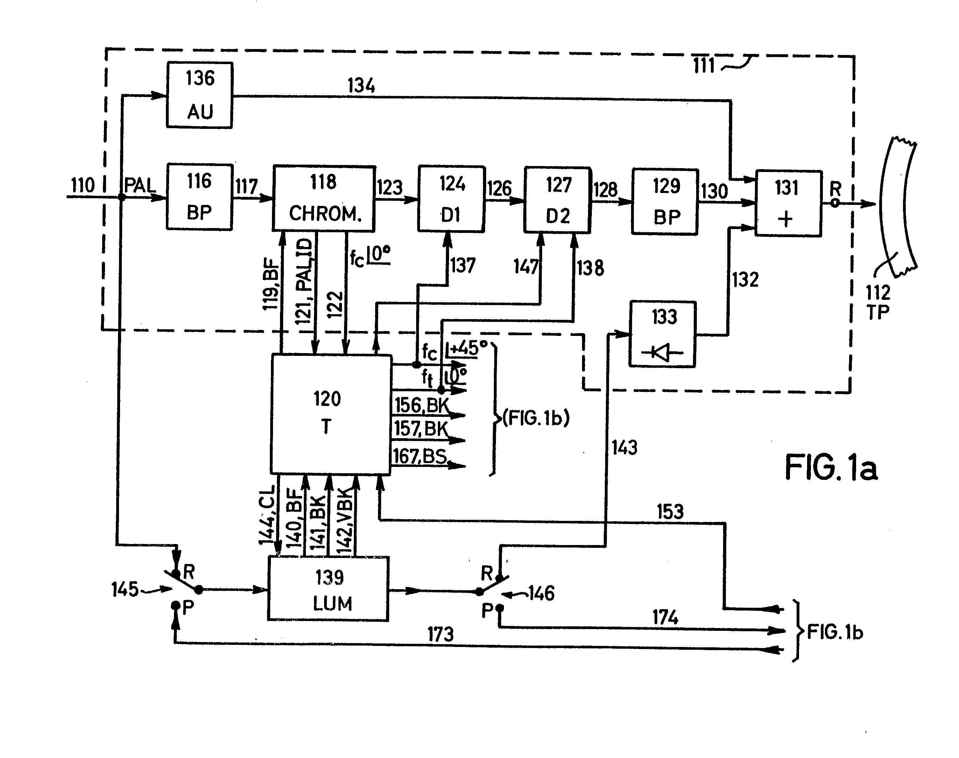

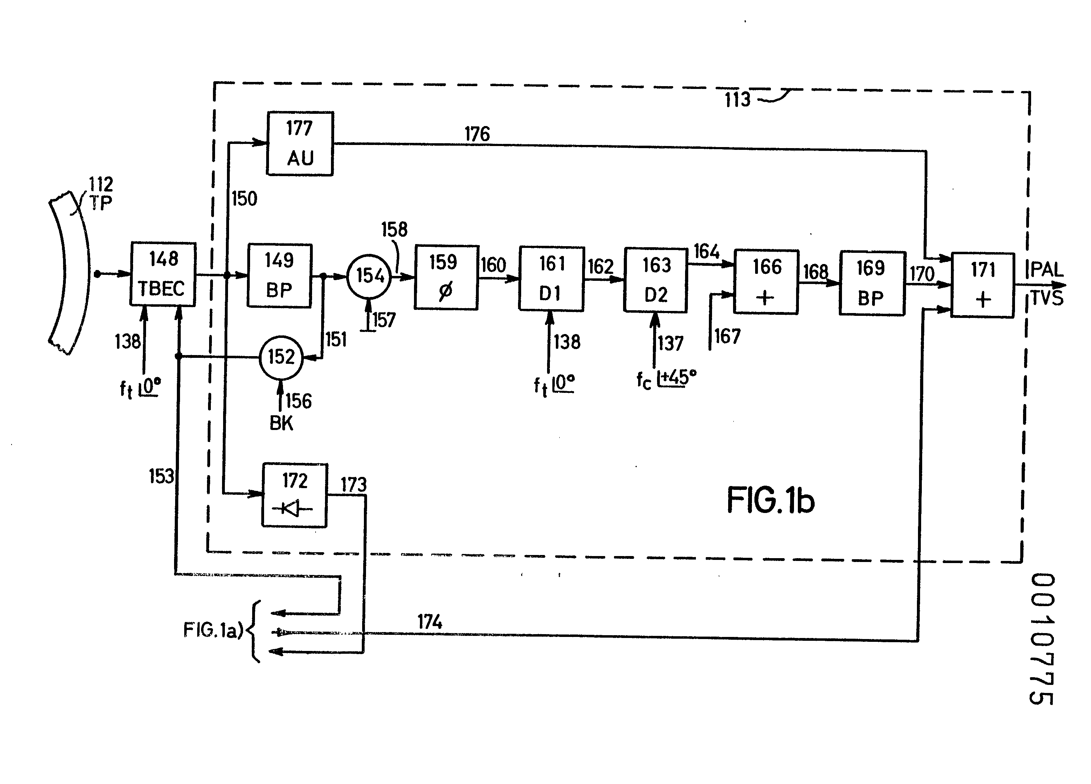

Figur 1a zeigt in Verbindung mit Figur 1b eine Ausführungsform der Erfindung, bei der ein PAL-Farbfernsehsignal auf
der Leitung 110 empfangen und durch einen Aufzeichnungsteil 111 (Figur 1a) kodiert wird, zur Speicherung auf
einem Magnetband 112. Ein Wiedergabeteil 113 (Figur 1b)
empfängt das vom Band wiedergewonnene, kodierte Signal
und setzt es in das PAL-kompatible Spezial-Farbhilfsträgersignal zur Ausgabe auf Leitung 114.

Der Aufzeichnungsteil 111 umfaßt ein Bandfilter (BP) 116
zum Empfang des Farbfernsehsignals, das auf Leitung 110
ankommt (PAL), und zur Abtrennung des quadraturmodulierten Farbträgers von den Basisband-Luminanz- und
Audio-Trägersignalen. Der abgetrennte Farbträger wird
über Leitung 117 an eine Farbsignalverarbeitungsvorrichtung
(CHROM) 118 geleitet, die von einem konventionellen Burst-
-Markiersignal (BF) gesteuert wird, das auf Leitung 119
von einem Zeitkreis (T) 120 stammt und das ein herkömmliches PAL-Kennungssignal (PAL ID) erzeugt, sowie ein Bezugssignal der Frequenz $f_c$ mit einer Phase von $0^o$
(d.h., $f_c \angle 0^o$). Die Farbsignal-Verarbeitungsvorrichtung 118
kann eine handelsübliche lineare integrierte Schaltung
sein. Das PAL-Kennsignal und das Bezugssignal $F_c \angle 0^o$ werden über Leitungen 121 bzw. 122 auf den Zeitkreis 120 gegeben, der wiederum alle zum korrekten Betrieb der Aufzeichnungs- und Wiedergabeteile der Anordnung erforderlichen Zeitgabesignale liefert.

Die Farbsignal-Verarbeitungsvorrichtung 118 liefert an
ihrem Ausgang auch einen Farbhilfsträger, der zur Weitergabe über Leitung 123 an einen der Eingänge eines ersten
doppelsymmetrischen Modulator (D1) 124 aufbereitet ist,
wobei letzterer den Hilfsträger zum Basisband demoduliert.
Das so erhaltene Basisband-Farbsignal wird dann über
Leitung 126 einem der Eingänge eines zweiten doppelsymme- trischen Modulators (D2) 127 zugeführt, der einen modulierten Zwischen-Farbhilfsträger der Frequenz $f_t$ erzeugt, zur Weitergabe über Leitung 128 an ein Bandfilter 129.

Ein doppelsymmetrischer Modulator ist eine bekannte Schaltung, die die an ihren beiden Eingängen angelegten Signale miteinander multipliziert, um ein Ausgangssignal mit Komponenten zu erzielen, deren Frequenzen sowohl die Summe als auch die Differenz der Frequenzen der entsprechenden Eingangssignale darstellen. Eine derartige Modulatorschaltung wird in dieser Anordnung bevorzugt, da das von ihr erzeugte Ausgangssignal keine Interferenz der entsprechenden Eingangssignale aufweist. Hierdurch wird eine Modulation mit unterdrückter Trägerfrequenz automatisch erzielt. Beide Modulatoren 124 und 127 können handelsübliche doppelsymmetrische Modulator-Demodulator-Elemente in Form integrierter Schaltungen sein.

Das Bandfilter (DP) 129 beseitigt alle unerwünschten Modulationskomponenten, insbesondere auch diejenigen, die bei der vom ersten doppelsymmetrischen Modulator (D1) 124 erzeugten Additionsfrequenzkomponente entstehen. Der gefilterte Hilfsträger wird dann über Leitung 130 einem Summierverstärker 131 zugeführt, der ihn zu den frequenzmodulierten Luminanz- und Audioträgersignalen addiert, um ein kodiertes Fernsehsignalgemisch zu erzeugen, das auf bekannte Art auf Magnetband (TP) 112 aufgezeichnet werden kann.

Der Summierverstärker 131 erhält das frequenzmodulierte Luminanzträgersignal über Leitung 132 von einem Luminanzmodulator 133 und des frequenzmodulierten Audioträgersignal über Leitung 134 von einer Audiofrequenz-Verarbeitungsschaltung (AU) 136. Wie in dem erwähnten US-Patent 4 123 774 beschrieben ist, werden die Trägerfrequenzen und Band-

breiten der Luminanz- und Audio-Trägersignale derart gewählt, daß Interferenz mit dem modulierten Farbhilfsträger vermieden wird. Beispiele für einen geeigneten Luminanzmodulator und eine geeignete Audiosignal-Verarbeitungsschaltung zur Erzeugung dieser Trägersignale sind ebenfalls in der US-Patentschrift beschrieben.

Erfindungsgemäß wird der Zwischen-Farbhilfsträger des Übertragungskanals abwechselnd mit U + V in einer Zeile, und mit U - V in der nächsten Zeile moduliert: In der Anordnung der Figur 1a geschieht dies, indem entsprechende erste und zweite Bezugssignale, nämlich $f_c \angle \pm 45^\circ$ und $f_t \angle 0^\circ$ über die Leitungen 137 und 138 an die entsprechenden zweiten Eingänge des ersten und zweiten doppelsymmetrischen Modulators (D1 und D2) 124 und 127 gelegt werden.

Das erste Bezugssignal $f_c \angle \pm 45^\circ$, das über die Leitung 137 an den ersten Modulator 124 gelegt wird, besitzt eine Frequenz $f_c$ und eine auf $+45^\circ$ festgelegte Phase (relativ zu dem im Farbsignal-Verarbeitungsteil (CHROM) 118 festgelegten Bezugssignal $f_c \angle 0^\circ$). Wie Figur 6 zeigt, ist also die Phase zwischen diesem Bezugssignal $f_c \angle \pm 45^\circ$ und der Farbkomponente U stets $45^\circ$, und die Phase zwischen dem Bezugssignal und der Farbkomponente V abwechselnd $45^\circ$ in einer Zeile und $135^\circ$ in der nächsten. Demgemäß ist das Basisband-Farbsignal (auf Leitung 126) (d.h. die Differenzfrequenzkomponente), das vom ersten Modulator (D1) 124 erzeugt wird, abwechselnd proportional zu U + V in einer Zeile und zu U - V in der nächsten. Die Summenfrequenz $2f_c$ kann vernachlässigt werden, da ihre Wirkungen später vom Bandfilter (BP) 129 beseitigt werden.

Das Bezugssignal $f_t \angle 0^\circ$, das über Leitung 138 dem zweiten doppelsymmetrischen Modulator 127 zugeführt wird, besitzt eine Frequenz $f_t$, die ein ungerades Vielfaches eines

0010775

Viertels der Zeilenfrequenz ist, und eine relative feste Phase von 0°. Hierdurch wird die Sichtbarkeit der Kreuzmodulation zwischen Chrominanz- und Luminanzsignalen reduziert, indem die zweite Harmonische des Farbhilfsträgers eine Phase aufweist, deren Vorzeichen für dieselbe Zeile in aufeinanderfolgenden Bildern wechselt. Man kann aber auch ein Bezugssignal verwenden, dessen Frequenz gleich $f_t$ ist und dessen Phasenwinkel zwischen 0° und 180° auf benachbarten Zeilenpaaren wechselt, d.h. eine sich wiederholende Phase von 0° in zwei aufeinanderfolgenden Zeilen und danach 180° in den zwei der aufeinanderfolgenden Zeilen.

Die den beiden doppelsymmetrischen Modulatoren (D1 und D2) 124 und 127 zugeführten Bezugssignale werden vom Zeitkreis (T) 120 erzeugt. Wie üblich empfängt und verarbeitet die Luminanz-Verarbeitungsschaltung (LUM) 139 das Fernseheingangssignal im PAL-Format, um das herkömmliche Burst--Markiersignal (BF) zu erzeugen, das eine Reihe von Impulsen enthält, die zeitlich mit den Farb-Burstsignalen (BS) zusammenfallen, ein herkömmliches Austast-Signal (BK), das eine Reihe von Impulsen enthält, die sich über die Dauer einer Horizontalaustastlücke oder Zeilenaustastlücke erstrecken und außerdem ein Vertikalaustastsignal (VBK). Diese drei Signale werden über Leitungen 140, 141 und 142 dem Zeitkreis 120 zugeführt.

Außerdem wird in der Luminanz-Verarbeitungsschaltung (LUM) 139 das Basisband-Helligkeits- oder Luminanzsignal von den Farb- und Audio-Trägersignalen abgetrennt und über Leitung 143 dem Luminanzmodulator 133 zugeführt, wo es vor seiner Aufzeichnung auf Magnetband 112 frequenzmoduliert wird. Die Luminanz-Verarbeitungsschaltung (LUM) 139 kann einen bekannten Synchronisiersignal-Generator, z.B. in Form einer integrierten Schaltung umfassen.

0010775

Der Zeitkreis 120 erzeugt das Bezugssignal $f_c \angle \pm 45°$ durch Verzögerung des Farb-Bezugssignals $f_c \angle 0°$, das über Leitung 122 vom Farbsignalverarbeitungsteil (CHROM) 118 geliefert wird, und erzeugt das Bezugssignal $f_t \angle 0°$ durch Verrastung seiner Frequenz mit einem ungeraden Vielfachen eines Viertels der Zeilenfrequenz (bestimmt durch das Austastsignalgemisch BK, das über Leitung 141 von der Luminanz-Verarbeitungsschaltung (LUM) 139 zugeführt wird). Eine geeignete Vorrichtung zur Erzeugung des Bezugssignal $f_t \angle 0°$ ist bekannt. Außerdem liefert der Zeitkreis 120 noch ein Taktsignal über Leitung 144 an die Luminanz-Verarbeitungsschaltung (LUM) 139, um deren Funktion zu steuern.

Die Luminanzverarbeitungsschaltung (LUM) 139 weist einen ersten und einen zweiten von Hand betätigbaren Schalter 145 bzw. 148 auf, die am Fernsehsignaleingang bzw. ihrem Basisband-Luminanzsignalausgang vorgesehen sind. Mit Hilfe dieser Schalter läßt sich die Schaltung (LUM) 139 sowohl während der Aufzeichnung eines Fernsehsignals auf Band (TP) 112 als auch während der Wiedergabe des vom Band wiedergewonnenen Signals verwenden. Im Aufzeichnungsbetrieb ("R") wird der Eingang für das PAL-Fernsehsignal mit der Verarbeitungsschaltung (LUM) 139 verbunden und das von der Schaltung erzeugte Basisband-Luminanzsignal wird dem Luminanzmodulator 133 zur FM-Modulation zugeführt.

Zur Korrektur von Zeitbasisfehlern, die im Fernsehsignalgemisch bei der Aufzeichnung und Wiedergabe des Signals auf Magnetband (TP) 112 auftreten, umfaßt der Aufzeichnungsteil Einsetzeinrichtungen zum Einfügen von Farb-Burstsignalen (BS) in den modulierten Zwischen-Farbhilfsträger für die Dauer aller aufeinanderfolgenden Zeilenaustastlücken (BL) mit Ausnahme einiger weniger. Im Ausführungsbeispiel der Anordnung gemäß Figur 1 wird dies durch ein

Burst-Steuersignal erreicht, das auf Leitung 147 vom Zeitkreis 120 auf eine Verstärkungs-Einstellklemme des zweiten doppelsymmetrischen Modulators (D2) 127 gegeben wird, um den Modulator während derartiger Intervalle unsymmetrisch zu schalten. Der Modulator (D2) 127 erzeugt infolgedessen während dieser Zeiträume ein unmoduliertes Ausgangssignal, das dem Bezugssignal $f_t \angle 0^o$ entspricht.

Die Farbburstsignale (BS) in den ausgewählten Zeilen werden unterdrückt, um anzugeben, welche Zeilen der U + V Farbinformation und welche der U - V Farbinformation entsprechen. Im Ausführungsbeispiel der Figur 1a wird der Farbburst in jeder vierten Zeile während der Vertikalaustastlücke unterdrückt, um anzugeben, daß diese Zeilen (sowie andere mit ihnen synchronisierte Zeilen) die Farbinformation U + V enthalten. Da jedes Videobild eine ungerade Zahl von Zeilen enthält, wechselt die Zeile oder wechseln die Zeilen, in denen die Farbburstsignale unterdrückt werden, von einem Bild zum nächsten. Die Zeitsteuerschaltung (T) 120 bewerkstelligt diese Zeilenauswahl, indem sie das über die Leitung 142 empfangene Vertikal-Austastsignal (BK), das über Leitung 121 empfangene PAL-Identifikationssignal (PAL ID) und das Ausgangssignal eines (nicht dargestellten) Flipflop kombiniert, der vom PAL-ID-Signal getaktet wird. Das Burst-Steuersignal kann dann erzeugt werden, indem das invertierte Zeilenauswahlsignal mit dem Austastsignalgemisch (BK) kombiniert wird.

Zusammenfassend läßt sich sagen, daß das vom Aufzeichnungsteil 111 erzeugte Fernsehsignalgemisch zur Aufzeichnung auf Magnetband (TP) 112 frequenzmodulierte Luminanz- und Audio-Trägersignal umfaßt, sowie einen AM-modulierten Farbhilfsträger, der auf sequentiellen Zeilen mit U + V und U - V moduliert ist, wobei die Trägerfrequenz unterdrückt

0010775

ist, und mit unmodulierten Farbbursts, die für die Dauer aller aufeinanderfolgender Horizontalaustastlücken, mit Ausnahme einiger weniger, auftreten. Die Maximalamplitude des modulierten Farbsignals ist für sämtliche Zeilen etwa gleichgroß, so daß nahezu die volle Dynamik der Farbwiedergabe in jeder Zeile ausnutzbar ist und der Rauschabstand in jeder Zeile annähernd gleichgroß ist.

Der Wiedergabeteil 113 in Figur 1b arbeitet mit dem Zeitkreis (T) 120 und der Luminanzsignal-Verarbeitungsschaltung (LUM) 139 der Figur 1a zusammen, um das vom Magnetband (TP) 112 wiedergewonnene Fernsehsignalgemisch in das spezielle, zur Modulation eines Trägersignals und zum Empfang und der Dekodierung durch einen herkömmlichen PAL-Fernsehempfänger geeignete Ausgabeformat (Spezial--Farbhilfsträgersignal) umzuwandeln. Vor seiner Verarbeitung im Wiedergabeteil 113 wird das vom Band wiedergewonnene Fernsehsignal in einer Zeitbasiskorrekturvorrichtung (TBEC) 148 verarbeitet, um die während der Aufzeichnung und Wiedergabe des Signals auftretenden zeitlichen Schwankungen auszugleichen. Die Fehlerkorrekturvorrichtung (TBEC) 148 bewirkt eine variable Verzögerung des Fernsehsignals, um die Phase der Farbbursts in dem vom Band wiedergewonnenen Fernsehsignals derjenigen des Bezugssignals $f_t \underline{/0^o}$, das über Leitung 138 vom Zeitkreis (T) 120 geliefert wird, anzugleichen. Eine Technik für die Zeitbasiskorrektur ist im US-Patent 4 090 215 beschrieben.

In der Anordnung der Figur 1b umfaßt der Empfängerteil 113 ein Bandfilter (BP) 149, das das aus auf Leitung 150 von der Zeitbasiskorrekturvorrichtung (TBEC) 148 gelieferte Fernsehsignalgemisch aufnimmt und den AM-modulierten Zwischen-Farbhilfsträger von den FM-modulierten Helligkeits- und Ton-Trägersignalen abtrennt. Der abgetrennte Zwischen-Farbhilfsträger wird über Leitung 151 einem ersten Gatter 152 zugeführt, das die während der Zeilenaustastlücken auftretenden Farbbursts (BS) zur Rückübertragung über die Leitung 153 zur Zeitbasiskorrekturvorrichtung (TBEC) 148 aussondert, sowie einem zweiten Gatter 154, über das die Farbbursts beseitigt werden, um lediglich den modulierten Zwischen-Farbhilfsträger zu belassen. Das Austastsignal BK und das invertierte Signal $\overline{BK}$, werden vom Zeitkreis (T) 120 über die Leitungen 156 und 157 den Gattern 152 bzw. 154 zugeleitet, um deren Trennfunktion zu steuern.

Der modulierte Zwischen-Farbhilfsträger wird vom zweiten Gatter 154 über die Leitung 158 einem Phasenentzerrer (∅) 159 zugeführt, der unerwünschte Phasenänderungen korrigiert, die durch Aussiebung des Signals sowohl im Bandpaß (BP) 129 des Aufzeichnungsteils 111, als auch im Bandfilter (BP) 144 des Wiedergabeteils 113 auftreten. Der phasenentzerrte Zwischen-Farbhilfsträger wird über die Leitung 160 an einen Eingang eines ersten doppelsymmetrischen Modulators 161 gelegt, der es auf ein Basisbandsignal demoduliert, das dem im Aufzeichnungsteil der Figur 1a erzeugten Basisband-Farbsignal entspricht. Einem zweiten Eingang des Modulators (D1) 161 wird das Bezugssignal $f_t\underline{/0^\circ}$ zugeführt, das auf der Leitung 138 vom Zeitkreis 120 übertragen wird. Die Phase des dem Modulators (D1) 161 zugeführten Zwischen-Farbträgers wird mit Hilfe der Zeitbasiskorrekturvorrichtung 148 automatisch derjenigen des Bezugssignals angeglichen.

Das vom ersten doppelsymmetrischen Modulator (D1) 161 erzeugte Basisband-Farbsignal wird sodann über die Leitung 162 einem Eingang eines zweiten doppelsymmetrischen Modulators (D2) 163 zugeführt, der einen Ausgangsfarbhilfsträger $f_c\underline{/\pm 45^\circ}$ (Spezial-Farbhilfsträgersignal) mit unter-

drücktem Träger liefert, wobei die Trägerfrequenz einem zweiten Eingang des Modulators (D2) 163 zugeführt wird. Die Hilfsträgerfrequenz $f_c \underline{/\pm 45^{\circ}}$ wird über Leitung 137 vom Zeitkreis (T) 120 geliefert und kann aus einem (hier nicht gezeigten) Oszillator stammen, der mit der Farbsignal-Verarbeitungsschaltung (CHROM) 118 zusammenarbeitet. Der Oszillator arbeitet "rückkopplungsfrei", wenn das Gerät ein vom Band (TP) 112 wiedergewonnenes Signal verarbeitet und vom Farbprozessor (CHROM) 118 kein Fernsehsignal empfangen wird.

Das vom zweiten doppelsymmetrischen Modulator (D2) 163 modulierte Spezial-Farbhilfsträgersignal wird über die Leitung 164 einer Summiereinrichtung 166 zugeführt, in der er die herkömmlichen Farbbursts im PAL-Format (d.h. +135$^{\circ}$ und -135$^{\circ}$ auf alternierenden Zeilen), die über die Leitung 167 vom Zeitkreis (T) 120 empfangen werden, summiert. Die +135$^{\circ}$-Farbbursts werden in Zeilen erzeugt, die U - V Farbinformation und die -135$^{\circ}$-Bursts in jenen Zeilen, die die U + V-Farbinformation enthalten. Entsprechende Synchronisierung der Burstphase mit der des Farbsignals läßt sich mittels des Zeitkreises (T) 120 durch Überwachung der über die Leitung 153 vom Gatter 152 gelieferten, gesteuerten Übertragungskanal-Farbbursts erzielen, um die Abwesenheit von Burstsignalen während der wenigen, in die Vertikalaustastlücke fallenden Abtastzeilen zu entdecken. Es wird daran erinnert, daß Zeilen ohne Farbbursts U + V Farbinformation enthalten. Sobald feststeht, daß eine gewisse Zeile einen Farbburst aufweist, wird ein (hier nicht gezeigter) Flipflop, der durch das periodisch auftretende Burst-Markiersignal BF getaktet ist, zurückgestellt. Der Flipflop befindet sich also im Zustand "eins" für Zeilen, die U + V Farbinformation enthalten und im Zustand "Null" für Zeilen, die U-V-Farbinformation enthalten. Der Ausgang des Flipflops dient dazu, abwechselnd

Phasenbezugssignale zwischen +135° und -135° zu wählen, die beide durch entsprechende Verzögerung des Bezugswinkels +45° (d.h. $f_c$ $\angle 45°$) erzeugt werden, wobei die auf Leitung 167 zu liefernden PAL-Bursts sodann durch Taktung des gewählten Phasenbezugssignals mit dem Burst-Markiersignal BF gewonnen werden.

Der von der Summiereinrichtung 166 erzeugte Farbhilfsträger wird über die Leitung 168 einem Bandfilter (BP) 169 zwecks Beseitigung der unerwünschten Modulationskomponenten zugeführt und sodann über Leitung 170 einem Summierverstärker 171 zur Addition mit einem Basisband-Luminanzsignal und einem frequenzmodulierten Audio-Trägersignal.

Das Basisband-Luminanzsignal, das dem Summierverstärker 171 zugeführt wird, wird ursprünglich von einem Helligkeitsmodulator 172 erzeugt, der im Wiedergabeteil 113 zur Demodulation des FM-modulierten Luminanzträgersignals in dem von der Zeitbasisfehlerkorrekturvorrichtung (TBEC) 148 empfangenen Fernsehsignal enthalten ist. Wenn die manuell zu betätigenden Schalter 145 und 146, die dem Luminanz-Verarbeitungskreis (LUM) 139 (Figur 1a) zugeordnet sind, in den Wiedergabezustand ("P") geschaltet werden, so wird das von dem Luminanz-Demulator 172 produzierte Basisband-Luminanzsignal über Leitung 173 an die Schaltung (LUM 139) gelegt. Da es sich im Betriebszustand befand, als das Gerät im Aufzeichnungsbetrieb ("R") arbeitete, verarbeitet der Luminanzprozessor (LUM) 139 das Fernsehsignal, um ein Burst-Markiersignal (BF), das Austast-Signalgemisch (BK) und das Vertikalaustastsignal zur Übertragung über die Leitungen 140, 141 und 142 zum Zeitkreis (T) zu liefern. Außerdem gibt die Schaltung (LUM) 139 das Basisband-Luminanzsignal zur Übertragung über den zweiten Schalter 146 und über Leitung 174 an den Summierverstärker 171.

Das Audio-Trägersignal, das dem Summierverstärker 171 über Leitung 176 vom Audio-Verarbeitungskreis 177 zugeführt wird, besitzt die Trägerfrequenz eines ursprünglichen PAL-Fernsehsignals, das vom Aufzeichnungsteil 111 (Figur 1a) empfangen wird.

Zusammenfassend läßt sich also sagen, daß das in Figur 1b gezeigte Wiedergabeteil 113 erfindungsgemäß ein spezielles Fernsehsignal mit PAL-kompatiblem Signalformat liefert, das ein Basisband-Luminanzsignal umfaßt, sowie ein FM-moduliertes Audio-Trägersignal und ein Spezial-Farbhilfsträgersignal, das amplitudenmoduliert ist - zeilensequentiell mit unterdrücktem Hilfsträger - mit U + V in einer Abtastzeile und mit U - V in der nächsten. Außerdem werden in jeder Zeile Farb-bursts mit korrekten Phasenwinkeln (d.h. +135$^\circ$ und -135$^\circ$ - in aufeinanderfolgenden Zeilen) produziert. Sowohl Luminanz- als auch Audio-Signale sind identisch mit den ursprünglichen Luminanz- und Audio-Signalen, die im PAL-Fernsehsignal enthalten sind, das vom Aufzeichnungssystem 111 empfangen wird. Der Spezial-Farbhilfsträger unterscheidet sich jedoch stark vom Quadratur-Farbträger des ursprünglichen Fernsehsignals. Nichtsdestoweniger läßt sich das im Spezialformat vorliegende Signal von einem herkömmlichen PAL-Fernsehempfänger ordnungsgemäß dekodieren, genauso als ob es ein herkömmliches PAL-Signalformat besäße, und es läßt sich ohne eine kostspielige Verzögerungsleitung erzeugen.

In Figur 5 ist der Farbdemodulatorteil eines herkömmlichen PAL-Fernsehempfängers gezeigt, der zur Demodulation des Farbhilfsträgers und zur Wiedergabe der beiden Basisband-Farbdifferenzsignale U und V dient. Der Demodulator empfängt das Farbhilfsträgereingangssignal auf Leitung 178 und verzögert es mittels der Verzögerungsleitung 179 für die Dauer einer Abtastzeile. Weiterhin

erhält der Demodulator ein Paar von Demodulationskanälen, für das U- bzw. V-Signal.

Der U-Demodulationskanal enthält ein Summierglied 180, um das auf Leitung 178 empfangene Farbhilfsträgersignal mit dem verzögerten, auf Leitung 181 von der Verzögerungsleitung 179 gelieferten Hilfsträger zu summieren. Der Ausgang des Summiergliedes wird über Leitung 182 einem U-Demodulatorkreis 183 zur Mischung mit einem Bezugssignal $f_c \underline{/0}°$ übertragen, das über die Leitung 184 empfangen wird. Der V-Demodulationskanal enthält eine Subtrahiervorrichtung 185, von der der verzögerte Hilfsträger vom Hilfsträgereingang subtrahiert und das so erhaltene Differenzsignal über Leitung 186 an eine V-Demodulationsschaltung 187 gelegt wird zur Mischung mit einem Bezugssignal $f_c \underline{/\pm 90}°$, $\underline{/-90}°$, das auf Leitung 188 zugeführt wird.

Im normalen Betrieb demoduliert der in Figur 5 gezeigte Farbdemodulator einen herkömmlichen PAL-Farbträger, der die Quadratur-Farbträgerkomponenten umfaßt, die erste mit dem Phasenwinkel 0°, die mit U moduliert ist, und die zweite mit dem Phasenwinkel, der zeilensequentiell zwischen +90° und -90° wechselt und mit V moduliert ist. Es leuchtet ein, daß bei der Demodulation eines herkömmlichen PAL-Farbträgers das Summierglied 180, welches die Trägersignale aufeinanderfolgender Zeilen summiert, ein Signal mit Phasenwinkel 0° und moduliert mit 2 U erzeugt, da die mit V modulierten Komponenten sich im wesentlichen gegenseitig aufheben. Auf ähnliche Weise erzeugt das Subtrahierglied 185, das die Trägersignale aufeinanderfolgender Zeilen voneinander subtrahiert, ein Signal mit einem Phasenwinkel, der zwischen +90° und -90° wechselt und mit 2 V moduliert ist, da die mit U modulierten Komponenten sich im wesentlichen gegenseitig aufheben. Werden also im U-Demodulator 183 das Ausgangssignal des Summierglie-

0010775

der und des Bezugssignal $f_c$ $\underline{/0^o}$ miteinander gemischt, entsteht das Basisband-Farbdifferenzsignal U zur Ausgabe auf Leitung 189. Ähnlich entsteht durch Mischung des Subtraktionsausgangssignals mit dem Bezugssignal $f_c$ $\underline{/90^o}$, $\underline{/-90^o}$ im V-Demodulator 187 das Basisband-Farbdifferenzsignal V zur Ausgabe auf Leitung 190.

Der herkömmliche Farbdemodulator der Figur 5 ist außerdem imstande, das PAL-kompatible Spezial-Farbhilfsträgersignal zu demodulieren, das mit der erfindungsgemäßen Anordnung erzeugt wird, um die Basisband-Farbdifferenzsignale U und V zu erhalten. Wie bereits erwähnt, ist der Spezial-Farbhilfsträger vorteilhaft ein zeilensequentielles Signal mit dem Phasenwinkel $+45^o$, der abwechselnd mit U + V in einer Zeile und mit U - V in der nächsten Zeile moduliert wird.

Bei der Demodulation dieses Spezial-Farbhilfsträgersignals erzeugt die Summiereinrichtung 180 ein Signal mit Phasenwinkel $+45^o$ und moduliert mit +2 U, das wiederum vom U-Demodulator 183 demoduliert wird, um das Basisband--Farbdifferenzsignal U zu bilden. Ähnlich erzeugt die Subtraktionsvorrichtung 185 ein Signal mit Phasenwinkel $+45^o$ und zeilenwechselnd moduliert mit +2 V bzw. -2 V, das wiederum im V-Demodulator 187 demoduliert wird, um das andere Farbdifferenzsignal V zu ergeben.

Im übrigen wird darauf hingewiesen, daß der konventionelle PAL-Farbdemodulator der Figur 5 auch imstande ist, einen Farbhilfsträger von allgemeinen Signalformat in erfindungsgemäßen Anordnungen zu demodulieren. Wie bereits erwähnt, umfaßt dieser Farbhilfsträger allgemeinen Formats einen Farbhilfsträger der Frequenz $f_c$ mit der Phase X (wobei X ein beliebiger fester Winkel zwischen 0 und $360^o$, jedoch nicht $0^o$, $90^o$, $180^o$ oder $270^o$ sein kann), der zeilen-

0010775

sequentiell mit K (U sin(X) + V cos(X)) bzw. K(U sin(X)) - V cos(X)) AM-moduliert ist, wobei K = +1 ist, wenn X zwischen $0^\circ$ und $90^\circ$ oder $180^\circ$ und $270^\circ$ liegt bzw. K = -1, wenn X zwischen $90^\circ$ und $180^\circ$ oder $270^\circ$ und $360^\circ$ gewählt wird.

Beim Demodulieren dieses Farbhilfsträgers mit allgemeinem Signalformat summiert die Einrichtung 180 fortlaufend den Hilfsträger der momentanen Abtastzeile und den Hilfsträger der vorhergehenden Zeile, um ein Signal mit der Phase X zu erzeugen, das mit (2 K sin(X)) U moduliert ist. Dieses Signal wird wiederum auf Leitung 182 dem U-Demodulator 183 zugeführt, wo es mit dem Bezugssignal $f_c \angle 0^\circ$ gemischt wird, das auf der Leitung 184 ankommt. Die Phasendifferenz zwischen diesen beiden Signalen ist der Winkel X. Der U-Demodulator 183 erzeugt also ein Basisbandsignal (2 K sin(X) cos x)) U, wobei der Faktor 2 K sin(X) cos(X) für sämtliche X-Werte positiv ist.

Ähnlich subtrahiert die Einrichtung 185 fortlaufend den Hilfsträger der vorhergehenden Abtastzeile vom Hilfsträger der momentanen Zeile, um ein Signal mit dem Phasenwinkel X zu bilden, das auf alternierenden Zeilen mit +(2 K cos(X) V und -(2 K cos(X) V moduliert ist. Dieses Signal wird wiederum auf Leitung 186 dem V-Demodulator 187 zugeführt, wo es mit dem Bezugssignal $f_c \angle 90^\circ$, $\underline{/-90^\circ}$ gemischt wird, das auf Leitung 188 ankommt. Die Phasendifferenz zwischen den beiden Signalen wechselt zwischen den Winkeln $(X-90^\circ)$ und $(X-(-90^\circ))$. Der V-Demodulator 187 erzeugt also ein Basisbandsignal, das abwechselnd den Ausdrücken +(2 K cos(X) cos(X-$90^\circ$)) V und -(2 K cos(X) cos(X-(-$90^\circ$))) V entspricht. Beide Ausdrücke sind das Äquivalent zu +(2 K cos(X) sin(X)) V, wobei der Faktor 2 K cos(X) sind(X) für sämtliche X-Werte positiv und identisch dem Faktor ist, der am Ausgang des U-Demodula-

0010775

tors 183 erscheint. Die nominelle Verstärkung der beiden U- und V-Demodulatorkanäle hat also den gleichen Wert, und der PAL-Demodulator demoduliert den erfindungsgemäßen Farbhilfsträger mit allgemeinem Signalformat ebenso korrekt, als wenn es sich um einen herkömmlichen PAL-Quadratur-Farbträger handelt.

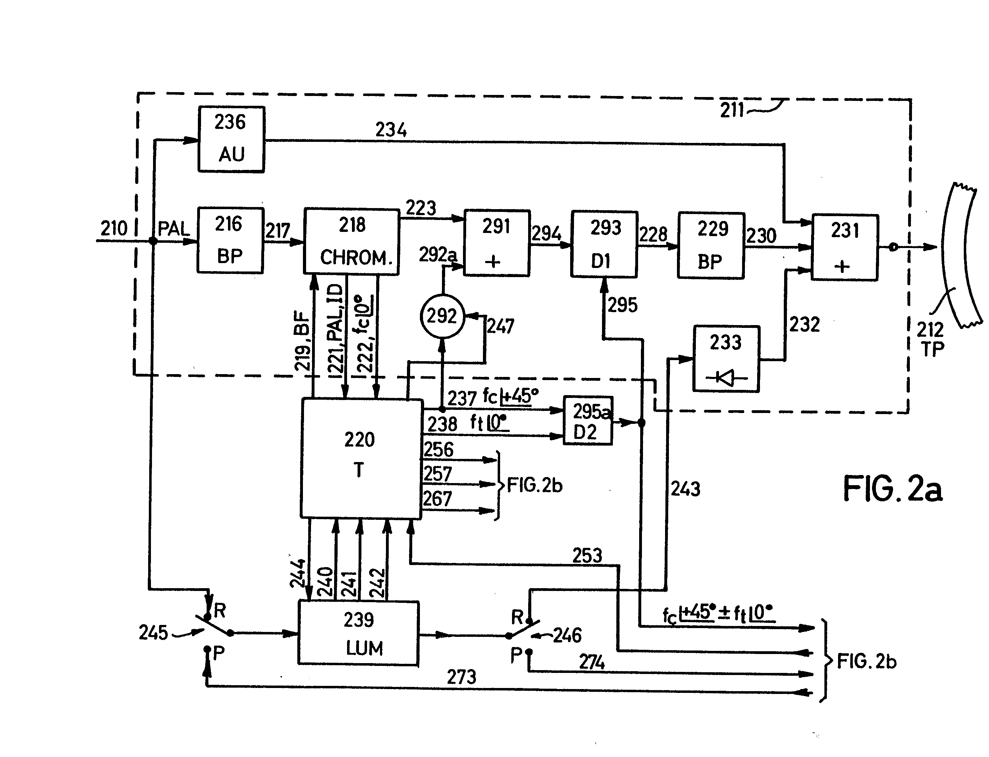

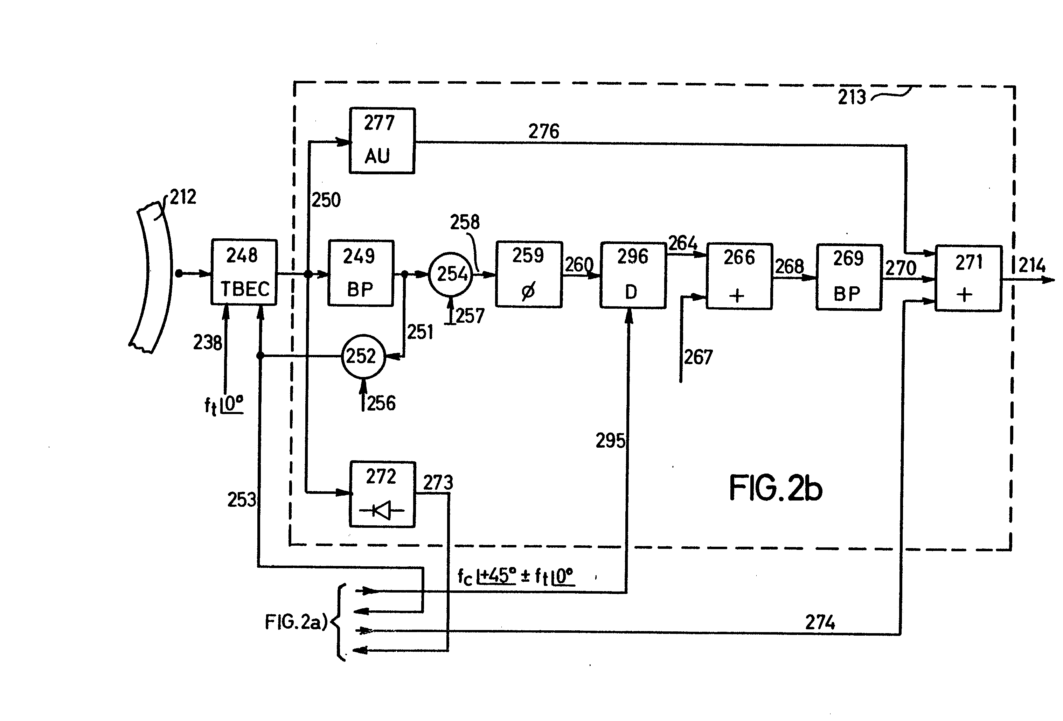

In den Figuren 2a und 2b ist eine weitere Anordnung der Erfindung dargestellt, die einen Aufzeichnungsteil 211 (Figur 2a) zum Umsetzen des PAL-Farbfernsehsignals in das Übertragungskanalformat zwecks Speicherung auf Magnetband 212 und einen Wiedergabeteil 213 (Figur 2b) zum Umsetzen des vom Band wiedergewonnenen Signals in ein PAL-kompatibles Spezial-Signal umfaßt, das sich zur Modulation eines Trägers und zum Empfang und zur Dekodierung durch einen konventionellen PAL-Fernsehempfänger eignet.

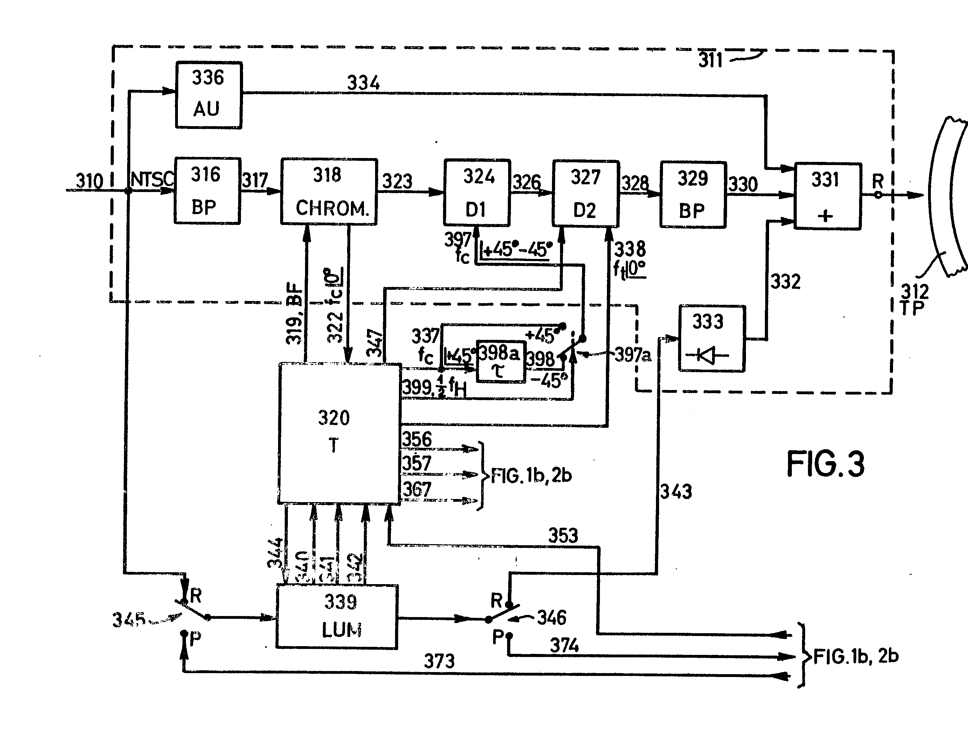

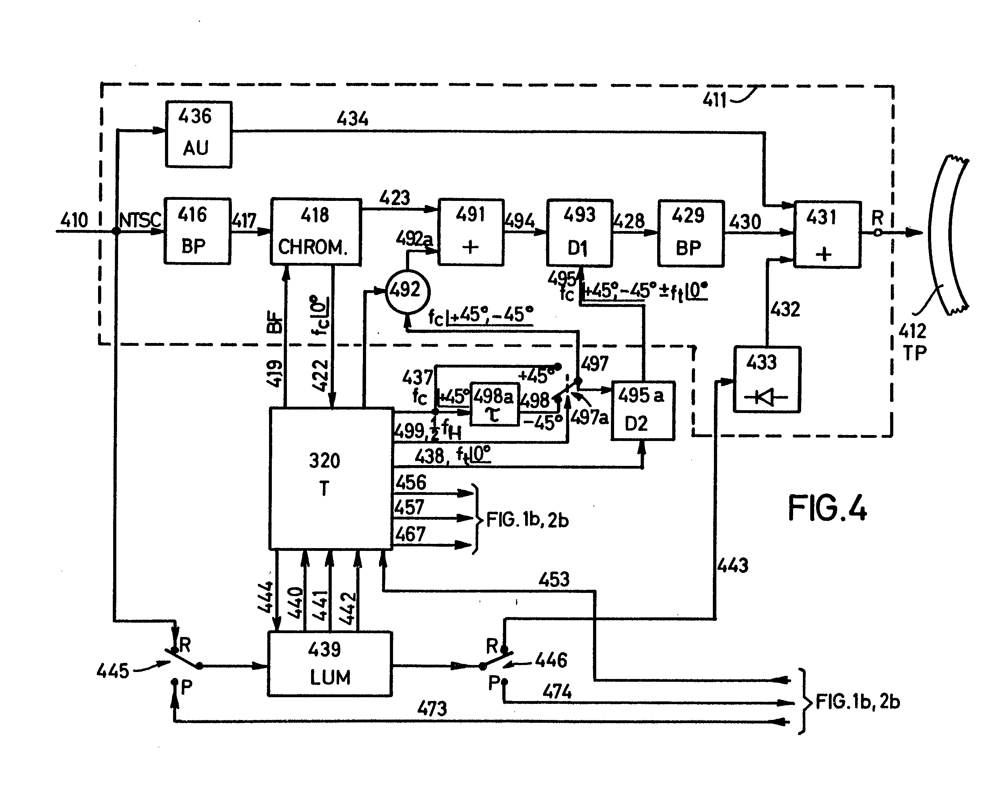

Es wird darauf hingewiesen, daß die beiden letzten Stellen jeder Bezugsnummer, die zur Kennzeichnung einer Einheit in den Figuren 2a und 2b verwendet werden, dieselben sind wie die beiden letzten Stellen, die zur Kennzeichnung der entsprechenden Einheiten in Figuren 1a und 1b dienen. Dasselbe gilt für die Bezugsziffern zur Kennzeichnung korrespondierender Einheiten in Figuren 3 und 4. Im übrigen entspricht die höchste Stelle jeder Bezugsziffer der Zahl der Zeichnung, in der sie erscheint.

Der Aufzeichnungsteil 211 in Figur 2a ist im wesentlichen ähnlich dem Aufzeichnungsteil 111 in Figur 1a. Das Farbfernsehsignal im PAL-Format kommt auf Leitung 210 an, und der Quadratur-Farbträger wird von den Helligkeits- und Audiosignalen über ein Bandfilter (BP) 216 abgetrennt. Der abgetrennte Farbhilfsträger wird sodann in einer Farbsignal-Verarbeitungsvorrichtung (CHROM) 218 verarbeitet, um ein PAL-Identifikationssignal (PAL ID) und ein Farbphasenbe-

Zugssignal $f_c \underline{/0^\circ}$ zur Übertragung zu einem Zeitkreis (T) 220 zu erhalten.

Farbbursts, die während aller aufeinanderfolgender Zeilenaustastlücken - mit Ausnahme einiger weniger - auftreten, werden hier auf andere Art eingefügt als in der Anordnung der Figur 1a. Die Farbbursts werden mit dem verarbeiteten Quadratur-Farbträger in einer Summiervorrichtung 219, die der Farbsignalverarbeitungsvorrichtung (CHROM) 218 nachgeschaltet ist, miteinander vereinigt. Ebenso wie bei den verlängerten Farbbursts, die gemäß Figuren 1a und 1b eingefügt werden, erleichtern diese Farbbursts das Feststellen und die Korrektur von Zeitbasisfehlern, die durch die Schritte der Aufzeichnung und Wiedergabe des Sendesignals auf Band auftreten. Die der Summiereinrichtung 291 zugeführten Farbbursts werden von einem Gatter 292 erzeugt, das ein Bezugssignal $f_c \underline{/\pm 45^\circ}$ im Einklang mit einem Burst-Steuersignal, einfügt, wobei diese Signale auf Leitungen 237 und 247 vom Zeitkreis (T) 220 geliefert werden. Die Summiereinrichtung 291 empfängt die Farbbursts auf Leitung 292a vom Gatter 292 und dem umgesetzten Farbträger auf Leitung 223 von der Farbsignal-Verarbeitungsschaltung (CHROM) 218.

Der Quadratur-Farbträger mit den verlängerten Farbbursts wird sodann in einem doppelsymmetrischen Modulator (D1) 293 in den modulierten Zwischen-Farbhilfsträger umgewandelt, in einem Bandfilter (BP) 229 gesiebt, um unerwünschte Modulationskomponenten zu beseitigen, um dann in einem Summierverstärker 231 mit FM-modulierten Helligkeits- und Audio-Trägersignalen kombiniert zu werden. Diese letzteren Trägersignale treffen auf Leitungen 232 und 234 von einem Helligkeitsmodulator 233 bzw. einer Audio-Verarbeitungsschaltung (AU) 236 ein. Auf diese Wiese wird ein Fernsehsignalgemisch im Übertragungskanalformat zur Aufzeichnung auf Magnetband 212 erhalten.

Der hauptsächliche Unterschied zwischen den Ausführungen der Figuren 1a und 2a ist im Verfahren zum Umsetzen des Quadratur-Farbträgers der Frequenz $f_c$ in den modulierten Zwischen-Farbhilfsträger der Frequenz $f_t$ zu sehen. In der Ausführung der Figur 2a fällt der Zwischenschritt der Reduktion des Quadratur-Farbträgers zum Basisband fort, und dieser Farbträger wird stattdessen direkt in den modulierten Zwischen-Farbhilfsträger umgesetzt.

Die Direktumwandlung des Farbträgers findet im doppelsymmetrischen Modulator (D1) 293 derart statt, daß der auf Leitung 294 von der Summiereinrichtung 291 gelieferte Quadratur-Farbträger einem seiner Eingänge zugeführt wird und daß ein zweiter Eingang über Leitung 295 ein spezielles Bezugssignal empfängt, wobei dieses Bezugssignal Komponenten mit den Summen- und Differenzfrequenzen von $f_c$ und $f_t$ enthält die mit $f_c\angle\pm45^{\circ} + f_t\angle 0^{\circ}$ bezeichnet sind. Das spezielle Bezugssignal wird erhalten, indem das Bezugssignal $f_c\angle\pm45^{\circ}$ mit einem anderen Bezugssignal $f_t\angle 0^{\circ}$ in einem zweiten doppelsymmetrischen Modulator (D2) 295a gemischt wird. Die Bezugsgrößen $f_c\angle\pm45^{\circ}$ und $f_t\angle 0^{\circ}$ werden beide vom Zeitkreis (T) 220 erzeugt und an den ersten und zweiten Eingang des Modulators (D2) 295a über Leitungen 237 bzw. 238 gelegt.

Wie auch bei den Ausführungsformen der Figuren 1a und 1b wird die Frequenz des Signals $f_t\angle 0^{\circ}$ als ein ungerades Vielfaches eines Viertels der Zeilenfrequenz gewählt, wodurch die sichtbare Störung des wiedergegebenen Videobildes, die auf der Kreuzmodulation des Farbhilfsträgers und des frequenzmodulierten Helligkeits-Trägersignal beruht, reduziert wird. Andernfalls kann die Frequenz $f_t$ als ein ungerades Vielfaches der Hälfte der Zeilenfrequenz gewählt werden und die Phase auf sequentiellen Zeilenpaaren ihr Vorzeichen wechseln.

Der doppelsymmetrische Modulator (D1) 293 erzeugt ein Ausgangssignal mit Komponenten, die Summen- als auch Differenzfrequenzen der Eingangssignale enthalten. Eine derartige Komponente ist ein Zwischen-Farbhilfsträger $f_t \underline{/0^o}$ mit der Frequenz $f_t$, der zeilensequentiell mit U + V bzw. U - V moduliert ist. Diese Komponente des Ausgangssignals wird als einzige vom Bandfilter (BP) 229 übertragen. Der Zwischen-Farbhilfsträger ist hier identisch in der Signalform mit dem Zwischen-Farbhilfsträger, der gemäß der Anordnung in Figur 1a erzeugt wird.

Ebenso ist das Wiedergabteil 213 der Figur 2b etwa dem Wiedergabeteil 113 der Figur 1b ähnlich. Das vom Magnetband (TP) 212 wiedergewonnene Fernsehsignal wird in einer Zeitbasiskorrekturvorrichtung (TBEC) 246 verarbeitet und gelangt dann in ein Bandfilter (BP) 249 zur Abtrennung des Zwischen-Farbhilfsträgers von den Helligkeits- und Ton-Trägersignalen. Der abgetrennte Zwischen-Farbhilfsträger wird einem Gatter 254 zur Unterdrückung der verlängerten Farbbursts zugeführt und sodann einem Phasenentzerrer 259 zur Korrektur von Phasenfehlern, die sowohl durch das Bandfilter (BP) 249 im Wiedergabesystem 213 (Figur 2b) als auch vom Bandfilter (BP) 229 im Aufzeichnungsteil 211 (Figur 2b) hervorgerufen sind.

Der phasenentzerrte Zwischen-Farbhilfsträger wird dann über einen doppelsymmetrischen Modulator (D) 296 und eine Summiereinrichtung 266 in den PAL-kompatiblen Spezial-Farbhilfsträgersignal (BP) 269 ausgesiebt, um unerwünschte Modulationskomponenten zu beseitigen. Schließlich wird er in einem Summierverstärker 271 mit dem von einer Helligkeitsverarbeitungsschaltung (LUM) 139 gelieferten Helligkeitssignal und einem von einer Audio-Verarbeitungsschaltung 277 gelieferten Audio-Trägersignal kombiniert. Dies ergibt das Farbfernsehausgangssignal in dem für den Empfang und die Dekodierung in einem herkömmlichen PAL-Empfänger geeigneten Spezialformat.

Der hauptsächliche Unterschied zwischen den Wiedergabeteilen der Figuren 1b und 2b liegt in den Verfahren zum Umsetzen des phasenentzerrten Zwischen-Farbhilfsträgers in das spezielle PAL-kompatible Signalformat. Im Ausführungsbeispiel der Figur 2b entfällt der Zwischenschritt der Reduktion des Zwischen-Farbhilfsträgers auf Basisband und stattdessen wird der vom Phasenentzerrer 259 gelieferte modulierte Farbhilfsträger (mit Frequenz $f_t$) direkt in das Spezial-Farbhilfsträgersignal (Frequenz $f_c$) umgewandelt.

Ähnlich wie bei der direkten Zwischen-Farbhilfsträgerumsetzung im Aufzeichnungsteil 211 der Figur 2a wird die Direktumwandlung im Wiedergabeteil 213 der Figur 2b über einen doppelsymmetrischen Modulator (D) 296 erreicht, der den modulierten Zwischen-Farbhilfsträger mit dem speziellen Bezugssignal $f_c \angle \pm 45^\circ \pm f_t \angle 0^\circ$ mischt. Insbesondere wird der auf Leitung 260 vom Phasenentzerrer 259 gelieferte Hilfsträger an einen Eingang des Modulators 296 gelegt, und das Spezialbezugssignal, das auf Leitung 295 vom Modulator 295a (Figur 2a) geliefert wird, einem zweiten Eingang zugeführt. Das Spezialfarbhilfsträgeraussgangssignal des Modulators 296 wird sodann über Leitung 264 der Summiereinrichtung 266 zugeführt, die es mit PAL-kompatiblen Farb-Bursts ($+135^\circ$ und $-135^\circ$) kombiniert, die auf Leitung 267 vom Zeitkreis (T) 220 (Figur 2a) herrühren.

Der Wiedergabeteil 213 der Figur 2b ebenso wie sein Gegenstück aus Figur 1b erzeugt also ein Fernsehsignal im speziellem PAL-kompatiblen Format, mit einem Spezial-Farbhilfsträgersignal, der sich vom herkömmlichen PAL-Farbträger wesentlich unterscheidet. Nichtsdestoweniger läßt

0010775

Sich das Spezialformat aufweisende Signal in einem herkömmlichen PAL-Fernsehempfänger ebenso gut dekodieren, als wenn das Signal das herkömmliche PAL-Signalformat aufweisen würde. Außerdem ist das Signal ohne die Verwendung einer kostspieligen Verzögerungsleitung erzeugbar.

Es wird betont, daß das Übertragungssignalformat des vom Aufzeichnungsteil 211 der Figur 2a erzeugten Fernsehsignalgemisches mit dem vom Aufzeichnungsteil 111 der Figur 1a erzeugten identisch ist. Folglich kann der Aufzeichnungsteil der Figur 2a zusammen mit dem Wiedergabeteil der Figur 1b verwendet werden. Ebenso läßt sich der Aufzeichnungsteil der Figur 1a in Verbindung mit dem Wiedergabeteil der Figur 2b einsetzen; dabei ist es jedoch erforderlich, daß am Zeitkreis 120 eine geringfügige Abänderung getroffen wird, um das Bezugssignal $f_c \angle 45^\circ \pm f_t \angle 0^\circ$ für den Einsatz beim Modulator (D) 296 der Figur 2b zu erzeugen.

Wenden wir uns jetzt der Figur 3 zu, in der eine weitere Anordnung der Erfindung dargestellt ist. Hierbei erfolgt die Umsetzung eines Farbfernsehsignals im NTSC-Format in das Übertragungskanalformat, zur Speicherung auf Magnetband 312. Das Format dieses Signals ist dem Format derjenigen Signale identisch, die vom Aufzeichnungsteil der Figuren 1a und 2a erzeugt werden und kann daher in Verbindung mit dem Wiedergabeteil der Figuren 1b und 2b eingesetzt werden, um das NTSC-Ausgangssignal im PAL-kompatiblen Signalformat zu erzeugen.

Die Anordnung der Figur 3 ist der aus Figur 1a, in der PAL-Fernsehsignale verarbeitet werden, sehr ähnlich. Das Fernsehsignal im NTSC-Format am Eingang wird einem Aufzeichnungsteil 311 zugeführt, wo der Quadratur-Farbträger über ein Bandpaßfilter (BP) 316 von den Basisband-Luminanz- und Audio-Trägersignalen abgetrennt und danach einer Farbsignal-Verarbeitungsschaltung 318 zugeführt wird, die ihn in herkömmlicher Weise verarbeitet und ein Bezugssignal $f_c \angle 0°$ zur Weiterleitung zum Zeitkreis 320 erzeugt. Der verarbeitete Farbträger wird dann mit einem Bezugssignal $f_c \angle ±45°$, $\angle -45°$ in einem ersten doppelsymmetrischen Modulator (D1) 324 gemischt, um ein Basisband-Farbsignal zu erzeugen, dessen Format mit dem im Ausführungsbeispiel der Figur 1 erzeugten Signal identisch ist, d.h. dem Signal, das eine alternierende Folge proportional U + V und U - V umfaßt.

Das vom ersten Modulator (D1) 324 erzeugte Basisbandsignal wird mit einem Zwischen-Farbhilfsträger $f_t \angle 0°$ in einem zweiten doppelsymmetrischen Modulator (D2) 327 gemischt, um einen zeilensequentiell modulierten Zwischen-Farbhilfsträger zu erzeugen. Der vom Modulator (D2) 327 erzeugte Zwischen-Farbhilfsträger wird danach in einem Bandfilter (BP) 329 gefiltert und in einem Summierverstärker 331 mit frequenzmodulierten Luminanz- und Audio-Trägersignalen kombiniert, um das Fernsehsignalgemisch zu erzeugen, das auf Magnetband (TP) 312 aufzuzeichnen ist.

Abgesehen von geringfügigen Abweichungen, die auf Unterschieden in den genauen Frequenzen der Farb- und Tonträger der NTSC- und PAL-Fernseh-Eingangssignale beruhen, besteht der einzige wesentliche Unterschied zwischen den Ausführungsformen der Figuren 1a und 3 darin, daß bei letzterer die Phase des Bezugssignals $f_c \angle ±45°$, $\angle -45°$, das dem ersten doppelsymmetrischen Modulator (D1) 324 zugeführt wird, zeilensequentiell zwischen den Winkeln +45° und -45° umgeschaltet wird, mit Bezug auf das Bezugssignal $f_c \angle 0°$, das von der Farbsignal-Verarbeitungsschaltung (CHROM) 318 abgeleitet ist.

0010775

Wie bereits erwähnt, umfaßt der NTSC-Quadratur-Farbträger eine Komponente mit einem Phasenwinkel von $+33^{\circ}$, die mit dem Farbdifferenzsignal Q (d.h. $0,41((B-Y) + 0,48(R-Y))$), sowie eine Quadraturkomponente mit einem Phasenwinkel von $+123^{\circ}$, die mit dem Farbdifferenzsignal I (d.h. $-0,27(B-Y) + 0,74(R-Y)$) moduliert ist. Auf diesen Zeilen beträgt die Phasendifferenz zwischen dem Bezugssignal und der modulierten Q-Komponente $12^{\circ}$, wenn das Bezugssignal $f_c \angle \pm 45^{\circ}$, $\angle -45^{\circ}$ bei $+45^{\circ}$ liegt, wobei die Phasendifferenz zwischen dem Bezugssignal und der modulierten I-Komponente $78^{\circ}$ beträgt. Auf diesen Zeilen sieht also das Ausgangssignal des ersten doppelsymmetrischen Modulators (D1) 324 folgendermaßen aus:

$$= (0,41(B-Y) + 0,48(R-Y)) \cos 12^{\circ} + (-0,27(B-Y) + 0,74(R-Y)) \cos 78^{\circ}$$

$$\cong 0,40(B-Y) + 0,47(R-Y) - 0,05(B-Y) + 0,15(R-Y)$$

$$\cong 0,35(B-Y) + 0,62(R-Y)$$

$$\cong 0,71 \ U + 0,71 \ V$$

Demgegenüber ist bei denjenigen Zeilen, bei denen das Bezugssignal $f_c \angle \pm 45^{\circ}$, $\angle -45^{\circ}$ die Phase $-45^{\circ}$ beträgt, die Phasendifferenz zwischen dem Bezugssignal und der modulierten Q-Komponente $78^{\circ}$, und zwischen dem Bezugssignal und der modulierten I-Komponente beträgt die Differenz $168^{\circ}$. Bei diesen Zeilen hat das Ausgangssignal des doppelsymmetrischen Modulators (D1) 324 die Form:

$$= (0,41(B-Y) + 0,48(R-Y)) \cos 78^{\circ} + (-0,27(B-Y) + 0,74(R-Y)) \cos 163^{\circ}$$

$$\cong 0,09(B-Y) + 0,10(R-Y) + 0,26(B-Y) - 0,72(R-Y)$$

$$\approx 0,35(B-Y) - 0,62(R-Y)$$

$$\approx 0,71\ U - 0,71\ V$$

Das umgeschaltete Bezugssignal $f_c \underline{/\pm45^{\circ}}$, $\underline{/-45^{\circ}}$ wird vom Modulator (D1) 324 auf Leitung 397 über einen Schalter 397a geliefert, der abwechselnd ein Bezugssignal $f_c \underline{/\pm45^{\circ}}$ wählt, das über Leitung 337 vom Zeitkreis (T) 320 erhalten wird, und einem Bezugssignal $f_c \underline{/-45^{\circ}}$, das über Leitung 398 von einer Verzögerungsvorrichtung (T) 398a geliefert wird, die die Verzögerung des Bezugssignals $f_c \underline{/\pm45^{\circ}}$ um $90^{\circ}$ bewirkt. Dieser Schalter 397a wird von einem Signal der Frequenz $1/2\ f_H$ gesteuert, das über Leitung 399 vom Zeitkreis 320 geliefert wird und das ein Rechtecksignal mit der halben Zeilenfrequenz ist.

Zusammenfassend erzeugt also der Aufzeichnungsteil 311 der Figur 3 ein Fernsehsignal im Übertragungskanalformat, zur Aufzeichnung auf Magnetband (TP) 312. Das Format dieses Signals gleicht dem im Aufzeichnungsteil der Figuren 1a bzw. 2a erzeugten Format und kann daher leicht im Wiedergabeteil der Figur 1b bzw. 2b in die spezielle PAL-kompatible Signalform umgesetzt werden. Um diese Kompatiblität zu erreichen, muß jedoch eine geringfügige Abänderung am Zeitkreis (T) 320 vorgenommen werden, um das spezielle Bezugssignal $f_c \underline{/\pm45^{\circ}} \pm f_t \underline{/0^{\circ}}$ zu erhalten, das im Wiedergabeteil der Figur 2b benötigt wird.

Figur 4 zeigt eine weitere Anordnung der Erfindung, ebenfalls für die Umsetzung eines Farbfernsehsignals im NTSC--Format in das Übertragungskanalformat zur Übertragung bzw. Speicherung auf Magnetband 412 dient. Dieses Ausgangssignalformat ist mit dem vom Aufzeichnungsteil jeder der Figuren 1a, 2a und 3 erzeugten Formate identisch.

0010775

Die Anordnung der Figur 4 ist der in Figur 2a, die der Erzeugung von Fernsehsignalen im PAL-Format dient, äußerst ähnlich. Das ankommende Fernsehsignal im NTSC-Format wird einem Aufzeichnungsteil 411 zugeführt, indem der Quadratur-Farbträger von den Basisband-Helligkeits- und Ton-Trägersignalen über ein Bandfilter (BP) 416 abgetrennt und sodann einer Farbsignal-Verarbeitungsschaltung (CHROM) 418 zugeführt wird, die ihn auf herkömmliche Weise verarbeitet und ein Bezugssignal $f_c \angle \Omega^o$ zur Weiterleitung an einen Zeitkreis (T) 420 bildet. Der verarbeitete Farbträger wird sodann in einer Summiereinrichtung 491 mit verlängerten Farbbursts kombiniert und das resultierende Signal sodann einem doppelsymmetrischen Modulator (D) 493 zugeführt, der es mit einem Bezugssignal $f_c \angle \pm 45^o$, $\angle -45^o \pm f_t \angle \Omega^o$ mischt, um einen modulierten Zwischen-Farbhilfsträger zu erzeugen. Das Format des so erhaltenen Zwischen-Farbhilfsträgersignals ist den in den Aufzeichnungsteilen der Figuren 1a, 2a und 3 erzeugten Zwischen-Farbhilfsträgern identisch. Der Zwischen-Farbhilfsträger wird schließlich in einem Bandfilter (BP) 429 gefiltert und in einem Summierverstärker 431 mit frequenzmodulierten Helligkeits- und Ton-Trägersignalen kombiniert.

Abgesehen von geringfügigen Unterschieden, die auf Differenzen der genauen Frequenzen der Farb- und Ton-Trägersignale der jeweiligen NTSC- und PAL-Fernsehsignale beruhen, ist der hauptsächliche Unterschied zwischen den Anordnungen der Figuren 2a und 4 in der Erzeugung des dem doppelsymmetrischen Modulator (D1) 493 zugeführten Bezugssignale zu sehen, wobei dieser Modulator den Quadratur-Farbträger in den Zwischen-Farbhilfsträger umwandelt. In der Anordnung in Figur 4 wird das Bezugssignal dadurch gewonnen, daß eine erste Bezugsgröße $f_t \angle \Omega^o$ der Frequenz $f_t$ mit einer Phase von $0^o$ mit einem zweiten Bezugssignal $f_c \angle \pm 45^o$, $\angle -45^o$, der Frequenz $f_c$ und einer Phase, die zeilensequentiell zwischen den Winkeln +45° und -45° umgeschaltet ist, gemischt wird.

Diese Mischung erfolgt in einem zweiten doppelsymmetrischen Modulator (D2) 495a, dem ein Bezugssignal $f_t\angle\underline{0}°$, $\angle 180°$ vom Zeitkreis (T) 420 über Leitung 438, sowie ein Bezugssignal $f_c\angle\pm 45°$, $\angle\underline{-}45°$ von einem Schalter 497a her über Leitung 497 zugeführt werden. Der Schalter erzeugt die Bezugsgröße $f_c\angle\pm 45°$, $\angle\underline{-}45°$ durch abwechselnde Wahl des Bezugssignals $f_c\angle\pm 45°$, das auf Leitung 437 vom Zeitkreis (T) 420 kommt, und einem Bezugssignal $f_c\angle\underline{-}45°$, das von einem Verzögerungsglied 498a über Leitung 498 geliefert wird, welch letztere eine Verzögerung des Bezugssignals $f_c\angle\pm 45°$ um 90° bewirkt. Der Schalter wird von einem Signal der Frequenz 1/2 $f_H$ gesteuert, das über Leitung 499 vom Zeitkreis (T) 420 geliefert wird.

Zusammenfassend erzeugt also auch der Aufzeichnungsteil der Figur 4 ein Fernsehsignalgemisch im Übertragungskanalformat zur Aufzeichnung auf Magnetband (TP) 412. Das Format dieses Signals ist mit den in den Aufzeichnungsteilen der Figuren 1a, 2a bzw. 3 erzeugten Formaten identisch und läßt sich daher leicht in den Wiedergabeteilen der Figuren 1b bzw. 2b in das spezielle PAL-kompatible Signalformat umsetzen. Um diese Kompatibilität zu erzielen, bedarf es jedoch einer geringfügigen Abänderung des Zeitkreises (T) 420, damit ein geeignetes Bezugssignal $f_c\angle\pm 45° \pm f_t\angle\underline{0}°$ erhalten werden kann, wie es im Wiedergabeteil 213 der Figur 2b erforderlich ist.

Aus obiger Beschreibung ergibt sich, daß die Erfindung wirksame Verfahren zum Umsetzen von Farbfernsehsignalen im PAL-Format und im NTSC-Format in ein Übertragungskanalsignalformat zwecks Übertragung bzw. Speicherung in einem Übertragungskanal und darauffolgender Rückumwandlung des Übertragungskanalsignalformats in ein spezielles, PAL-kom-

0010775

patibles Ausgangssignalformat ermöglicht. Dieses im Spezialformat vorliegende Ausgangssignal läßt sich dann zur Modulation eines Trägersignals zum Empfang und zur endgültigen Dekodierung in einem herkömmlichen PAL-Fernsehempfänger verwenden, ebenso, als wenn es ein herkömmliches PAL-Format besäße, ohne daß Verzögerungsvorrichtungen erforderlich wären.

Obwohl die Erfindung hier im einzelnen unter Bezugnahme auf ihre vorteilhaften Ausführungsformen beschrieben wurde, ist dem Durchschnittsfachmann ohne weiteres klar, daß Modifikationen möglich sind, ohne vom Sinn und Umfang der Erfindung abzuweichen. Die angegebenen Anordnungen wurden in der Praxis erprobt und wiesen die angegebenen Vorteile gegenüber bekannten Schaltungen auf.

Patentansprüche

1. Verfahren zum Umsetzen eines Farbfernsehsignals mit Quadratur-Farbträger in ein für PAL-Farbfernsehempfänger kompatibles Eingangssignal, wobei der Quadratur-Farbträger die Frequenz $f_c$ aufweist sowie zwei durch ein erstes und ein zweites Farbdifferenzsignal amplitudenmodulierte Signalkomponenten, die außerdem zueinander quadraturmoduliert sind, umfassend die Verfahrensschritte Umsetzen des Quadratur-Farbträgers in ein Spezial-Farbhilfsträgersignal mit einer Frequenz, die mit einem PAL-Farbfernsehempfänger kompatibel ist und die einen festen Phasenwinkel X besitzt, der beliebig zwischen $0°$ und $360°$ liegen, jedoch nicht $0°$, $90°$, $180°$ und $270°$ betragen kann, dadurch gekennzeichnet, daß das Spezial-Farbhilfsträgersignal zeilensequentiell mit dem Signal $K(U \sin(X) + V \cos(X))$ bzw. $K(U \sin(X) - V \cos(X))$ amplitudenmoduliert ist, wobei $K = +1$ ist für Winkel zwischen $0°$ und $90°$ sowie $180°$ und $270°$ und $K = -1$ ist für Winkel zwischen $90°$ und $180°$ sowie $270°$ und $360°$, und wobei U und V die von der ersten und zweiten Farbdifferenzsignalen abgeleiteten Standard-Farbdifferenzsignale sind, wodurch das Spezial-Farbhilfsträgersignal ohne die Benutzung einer Verzögerungsleitung erzeugbar und in einem PAL-Farbfernsehempfänger dekodierbar wird, so daß die Standard-Farbdifferenzsignale U und V erhalten werden.

2. Verfahren nach Anspruch 1, dadurch gekennzeichnet, daß das Umsetzen in folgenden Einzelschritten erfolgt: Umsetzen des Quadratur-Farbträgers in einen Übertragungskanal, dessen Zwischen-Farbhilfsträger zeilensequentiell mit den Signalen

De/ro

0010775

U sin(X) + V cos(X) bzw. U sin(X) - V cos(X)

moduliert ist und Umsetzen des modulierten Zwischen-Farbhilfsträgers aus dem Übertragungskanal in das Spezial-Farbhilfsträgersignal als Eingangssignal für den PAL-Farbfernsehempfänger.

3. Verfahren nach Anspruch 1, wobei das Farbfernsehsignal ein PAL-Signal ist, dadurch gekennzeichnet, daß das Umsetzen folgende Einzelschritte umfaßt: Mischen des Quadratur-Farbträgers mit einem ersten Bezugssignal der Frequenz $f_c$ und der Phase K ($90^O$-X), wodurch ein Basisband-Farbsignal erhalten wird, das zeilensequentiell zwischen den Signalformen

K(U sin(X) + V cos(X)) bzw.
K(U sin(X) - V cos(X))

wechselt und AM-modulieren eines zweiten Bezugssignals mit dem Basisband-Farbsignal zum Erzeugen des Spezial-Farbhilfsträgersignals, wobei das zweite Bezugssignal die Frequenz $f_c$ und die feste Phase X besitzt.

4. Verfahren nach Ansprüchen 1 und 2, dadurch gekennzeichnet, daß das Umsetzen außerdem folgende Zwischenschritte umfaßt:
Modulieren eines dritten Bezugssignals der Frequenz $f_t$ mit dem Basisband-Farbsignal zum Erzeugen eines modulierten Zwischen-Farbhilfsträgers für den Übertragungskanal und Demodulieren des modulierten Zwischen-Farbhilfsträgers zum Wiederherstellen des Basisband-Farbsignals.

5. Verfahren nach Anspruch 1, wobei das Farbfernsehsignal ein PAL-Signal ist, dadurch gekennzeichnet, daß das Umsetzen folgende Einzelschritte umfaßt:

Mischen eines ersten Bezugssignals der Frequenz $f_c$ und der Phase K ($90^o$-X) mit einem zweiten Bezugssignal der Frequenz $f_t$, um ein drittes Bezugssignal mit den Summen- und Differenzfrequenzen von $f_c$ und $f_t$ zu erzeugen, Mischen des Quadratur-Farbträgers mit dem dritten Bezugssignal zum Bilden eines Zwischen-Farbhilfsträgers der Frequenz $f_t$ für den Übertragungskanal, der zeilensequentiell in den Signalformen

$$U \sin(X) + V \cos(X) \text{ bzw. } U \sin(X) - V \cos(X)$$

AM-moduliert ist und Mischen eines vierten Bezugssignals der Frequenz $f_t$ und der Phase X mit einem fünften Bezugssignal der Frequenz $f_t$ und der Phase des Zwischen-Farbhilfsträgers, wodurch ein sechstes Bezugssignal gebildet wird, das Komponenten mit den Summen- und Differenzfrequenzen von $f_c$ und $f_t$ aufweist, und Mischen des Zwischen-Farbhilfsträgers aus dem Übertragungssignal mit dem sechsten Bezugssignal zur Bildung des Spezial-Farbhilfsträgersignals.

6. Verfahren nach Anspruch 1, wobei das Farbfernsehsignal ein NTSC-Signal ist, <u>dadurch gekennzeichnet,</u> daß das Umsetzen folgende Einzelschritte umfaßt: Mischen des Quadratur-Farbträgers mit einem ersten Bezugssignal der Frequenz $f_c$ und einer zeilensequentiell zwischen +K ($90^o$-X) und -K($90^o$-X) umgeschalteten Phase wodurch ein Basisband-Farbsignal gebildet wird, das zeilensequentiell zwischen den Signalformen

$$K (U \sin(X) + V (\cos(X)) \text{ bzw.}$$
$$K (U \sin(X) - V (\cos(X))$$

wechselt und AM-modulieren eines zweiten Bezugssignals mit dem Basisband-Farbsignal zum Erzeugen des Spezial--Farbhilfsträgersignals.

7. Verfahren nach Anspruch 6, dadurch gekennzeichnet, daß das zweite Bezugssignal ein Zwischen-Farbhilfsträger eines Übertragungskanals ist, der nach Wiedergewinnen aus dem Übertragungskanal und Umsetzen das Spezial-Farbhilfsträgersignal ergibt.

8. Verfahren nach Anspruch 1, wobei das Farbfernsehsignal ein NTSC-Signal ist, dadurch gekennzeicnet, daß das Umsetzen folgende Einzelschritte umfaßt: Mischen eines ersten Bezugssignals der Frequenz $f_c$ und einer zeilensequentiell zwischen $+K\,(90^o\text{-}X)$ und $-K\,(90^o\text{-}X)$ umgeschalteten Phase mit einem zweiten Bezugssignal der Frequenz $f_t$ zur Bildung eines dritten Bezugssignals mit Summen- und Differenzfrequenzen von $f_c$ und $f_t$, Mischen des Quadratur-Farbträgers mit dem dritten Bezugssignal zum Bilden eines Zwischen-Farbhilfsträgers der Frequenz $f_t$ für den Übertragungskanal, der zeilensequentiell mit den Signalen

$$U \sin(X) + V \cos(X) \text{ bzw. } U \sin(X) - V \cos(X)$$

AM-moduliert ist, und Umsetzen des Zwischen-Farbhilfsträgers in das Spezial-Farbhilfsträgersignal.

9. Verfahren nach einem oder mehreren der Ansprüche 1 bis 8, dadurch gekennzeichnet, daß der Phasenwinkel X als ungerades Vielfaches von $+45^o$ gewählt wird, so daß das Spezial-Farbhilfsträgersignal aufeinanderfolgenden Horizontalzeilen mit einem Signal AM-moduliert ist proportional zu (U + V) und (U - V) ist.

0010775

10. Anordnung zur Durchführung des Verfahrens zum Umsetzen eines PAL-Farbfernsehsignals nach einem oder mehreren der Ansprüche 1 bis 4, gekennzeichnet durch, einen Mischer für den PAL-Quadratur-Farbträger mit dem ersten Bezugssignal der Frequenz $f_c$ und der Phase K (90°-X) zur Bildung des Basisband-Farbsignals, das zeilensequentiell zwischen K (U sin(X) + V cos(X)) und K(U sind(X) - V cos(X)) wechselt, eine Modulatoreinrichtung zum Modulieren des zweiten Bezugssignals der Frequenz $f_t$ mit dem Basisband-Farbsignal zur Bildung des Zwischen-Farbhilfsträgers für den Übertragungskanal, eine Demodulatoreinrichtung für den Zwischen-Farbhilfsträger zur Rückgewinnung des Basisband-Farbsignals und einen AM-Modulator zum AM-Modulieren eines dritten Bezugssignals der Frequenz $f_c$ und der Phase X mit dem zurückgewonnenen Basisband-Farbsignal zur Erzeugung des Spezial-Farbhilfsträgersignals.

11. Anordnung nach Anspruch 10, dadurch gekennzeichnet, daß der Zwischen-Farbhilfsträger AM-moduliert ist und daß die Modulatoreinrichtung für das zweite Bezugssignal außerdem Einsetzeinrichtungen für Farbburstsignale in die Horizontal-Austastlücken des AM-modulierten Zwischen-Farbhilfsträgers aufweisen, wobei die Burstsignale die Frequenz $f_t$ besitzen und sich im wesentlichen über die Horizontal-Austastlücke erstrecken, und daß die Demodulationseinrichtungen außerdem Einrichtungen zum Feststellen des Farbburstsignals und Phasenangleicheinrichtungen mit der Phase des zweiten Bezugssignals sowie Mischeinrichtungen enthält, zum Mischen des modulierten Zwischen-Farbhilfsträgers mit dem zweiten Bezugssignal, um das Basisband-Farbsignal zu erhalten.

12. Anordnung zur Durchführung des Verfahrens zum Umsetzen eines PAL-Farbfernsehsignals nach Anspruch 5, gekennzeichnet durch einen Umsetzer für den PAL-Quadratur-Farbträger in den Zwischen-Farbhilfsträger eines Übertragungskanals, der die Frequenz $f_t$ hat und zeilensequentiell AM-moduliert ist mit

$$U \cos(90^\circ - X) + V \cos(X) \text{ bzw.}$$
$$U \sin(X) - V \cos(X),$$

wobei der Umsetzer folgende Einheiten enthält: einen Mischer für ein erstes Bezugssignal der Frequenz $f_c$ und der Phase $K(90^\circ - X)$ mit einem zweiten Bezugssignal der Frequenz $f_t$ zur Bildung eines dritten Bezugssignals mit den Summen und Differenzfrequenzen von $f_c$ und $f_t$ und einen weiteren Mischer zum Mischen des Quadratur-Farbträgers mit dem dritten Bezugssignal zur Bildung des Zwischen-Farbhilfsträgers und weitere Einrichtungen zum Umsetzen des Zwischen-Farbhilfsträgers aus dem Übertragungskanal in das Spezial-Farbhilfsträgersignal, diese Einrichtungen enthalten ferner einen Mischer für das vierte Bezugssignal der Frequenz $f_c$ und der Phase X mit dem fünften Bezugssignal der Frequenz $f_t$ und derselben Phase des Zwischen-Farbhilfsträgers, wodurch das sechste Bezugssignal, das Summen- und Differenzfrequenzen von $f_c$ und $f_t$ enthält, gebildet wird und einen weiteren Mischer für den Zwischen-Farbhilfsträger mit dem sechsten Bezugssignal zur Bildung des Spezial-Farbhilfsträgersignals.

13. Anordnung nach Anspruch 12, dadurch gekennzeichnet, daß der Umsetzer eine Einsetzvorrichtung für Farbburstsignale in die Austastlücken des modulierten Zwischen-Farbhilfsträgers enthält, wobei die Burstsignale die Frequenz $f_t$ besitzen und sich im wesentlichen über die Horizontal-Austastlücken erstrecken und die weiteren Umsetzeinrichtungen außerdem Einrichtungen zum Feststellen der Farbburstsignale im modulierten Zwischen-Farbhilfsträger vorgesehen sind sowie Phasenangleichseinrichtungen zwischen den Farbburstsignalen und dem fünften Bezugssignal.

14. Anordnung zur Durchführung des Verfahrens zur Verarbeitung eines NTSC-Farbfernsehsignals nach Ansprüchen 1 und 6, gekennzeichnet durch, einen Mischer für den NTSC-Quadratur-Farbträger mit einem ersten Bezugssignal derselben Frequenz $f_c$ und einer zeilensequentiell zwischen $K(90^{\circ}-X)$ und $-K(90^{\circ}-X)$ umgeschalteten Phase zur Bildung des Basisband-Farbsignals, das zeilensequentiell zwischen den Signalformen

$$K (U \sin(X) + V \cos(X)) \text{ und}$$
$$K (U \sin X - V \cos(X))$$

wechselt, sowie eine Modulatoreinrichtung zum Modulieren des zweiten Bezugssignals der Frequenz $f_t$ mit dem Basisband-Farbsignal zur Bildung des modulierten Zwischen-Farbhilfsträgers für den Übertragungskanal und eine Umsetzeinrichtung zum Umsetzen des Zwischen-Farbhilfsträger aus dem Übertragungskanal in das Spezial-Farbhilfsträgersignal.

15. Anordnung nach Anspruch 14, dadurch gekennzeichnet, daß der Zwischen-Farbhilfsträger AM-moduliert ist und daß die Modulatoreinrichtung für das zweite Bezugssignal außerdem Einsetzeinrichtungen für Farbburstsignale in die Horizontal-Austastlücken des AM-modulierten Zwischen-Farbhilfsträgers aufweisen, wobei die Burstsignale die Frequenz $f_t$ besitzen und sich im wesentlichen über die Horizontal-Austastlücke erstrecken, und daß die Einsetzeinrichtungen außerdem Einrichtungen zum Feststellen der Farbburstsignale im Zwischen-Farbhilfsträger aus dem Übertragungskanal umfassen.

16. Anordnung zur Durchführung des Verfahrens zur Verarbeitung eines NTSC-Farbfernsehsignals nach Ansprüchen 7 und 8, gekennzeichnet durch einen Umsetzer für den NTSC-Quadratur-Farbträger in den Zwischen-Farbhilfsträger eines Übertragungskanals, der die Frequenz $f_t$ hat und der zeilensequentiell AM-moduliert ist mit

$$U \cos(90^\circ-X) - V \cos(X) \text{ bzw.}$$
$$U \sin(X) - V \cos(X),$$

wobei der Umsetzer folgende Einheiten enthält: einen Mischer für ein erstes Bezugssignal der Frequenz $f_c$ und der Phase $K(90^\circ-X)$ mit einem zweiten Bezugssignal der Frequenz $f_t$ zur Bildung eines dritten Bezugssignals mit den Summen- und Differenzfrequenzen von $f_c$ und $f_t$ und einen zweiten Mischer zum Mischen des Quadratur-Farbträgers mit dem dritten Bezugssignal zur Bildung des Zwischen-Farbhilfsträgers und weitere Einrichtungen zum Umsetzen des Zwischen-Farbhilfsträgers aus dem Übertragungskanal in das Spezial-Farbhilfsträgersignal.

17. Anordnung nach Anspruch 16, dadurch gekennzeichnet, daß der Umsetzer außerdem Summiereinrichtungen enthält zum Einsetzen der Farbburstsignale der Frequenz $f_c$ und der zeilesequentiell zwischen $+K(90^\circ-X)$ und $-K(90^\circ-X)$ umgeschalteten Phase in die Horizontal-Austastlücken des Quadratur-Farbträgers, der dem Mischer zur Bildung des dritten Bezugssignals zugeführt wird, wobei der Mischer außerdem Einsetzeinrichtungen von entsprechenden Farbburstsignalen der Frequenz $f_t$ aufweist.

0010775

18. Anordnung zur Durchführung des Verfahrens zum Umsetzen eines PAL-Farbfernsehsignals nach Ansprüchen 1 bis 4, gekennzeichnet durch eine Abtrenneinrichtung für den PAL-Quadratur-Farbträger der Frequenz $f_c$ und einen Umsetzer zum Umsetzen des Quadratur-Farbträgers in einen Zwischen-Farbhilfsträger der Frequenz $f_t$, der zeilensequentiell mit dem Signal

$$U \sin(X) + V \cos(X) \text{ bzw. } U \sin(X) - V \cos(X)$$

amplitudenmoduliert ist.

19. Anordnung nach Anspruch 18, dadurch gekennzeichnet, daß der Umsetzer einen Mischer enthält zum Mischen des Quadratur-Farbträgers mit einem ersten Bezugssignal der Frequenz $f_c$ und der festen Phase $K(90^o-X)$ zur Bildung eines Basisband-Farbsignals, das zeilensequentiell zwischen den Signalformen

$$K (U \sin(X) + V \cos(X)) \text{ und}$$
$$K (U \sin(X) - V \cos(X))$$

wechselt und daß Modulatoreinrichtungen vorgesehen sind zum Modulieren eines zweiten Bezugssignals der Frequenz $f_t$ mit dem Basisband-Farbsignal zur Erzeugung des Zwischen-Farbhilfsträgers.

20. Anordnung nach Anspruch 18, dadurch gekennzeichnet, daß der Umsetzer einen Mischer enthält zum Mischen eines ersten Bezugssignals der Frequenz $f_c$ und der Phase $K(90^o-X)$ mit einem zweiten Bezugssignal der Frequenz $f_t$, wodurch ein drittes Bezugssignal mit den Summen- und Differenzfrequenzen von $f_c$ und $f_t$ entsteht, und ein weiterer Mischer zum Mischen des Quadratur-Farbträgers mit dem dritten Bezugssignal vorgesehen ist zur Bildung des Zwischen-Farbhilfsträgers.

21. Anordnung zur Durchführung des Verfahrens zum Umsetzen eines NTSC-Farbfernsehsignals nach Ansprüchen 1 und 6 oder 1 und 7, <u>gekennzeichnet durch</u> eine Abtrenneinrichtung für den NTSC-Quadratur-Farbträger der Frequenz $f_c$ und einen Umsetzer zum Umsetzen des Quadratur-Farbträgers in einen Zwischen-Farbhilfsträger der Frequenz $f_t$, der zeilensequentiell mit dem Signal

$$U \sin(X) + V \cos(X) \text{ bzw. } U \sin X - V \cos(X)$$

amplitudenmoduliert ist.

22. Anordnung nach Anspruch 21, <u>dadurch gekennzeichnet,</u> daß der Umsetzer einen Mischer enthält zum Mischen des Quadratur-Farbträgers mit einem ersten Bezugssignal der Frequenz $f_c$ und der zeilensequentiell zwischen $+K(90^{\circ}-X)$ und $-K(90^{\circ}-X)$ umgeschalteten Phase zur Bildung eines Basisband-Farbsignals, das zeilensequentiell zwischen den Signalformen

$$K (U \sin(X) + V \cos(X)) \text{ und}$$
$$K (U \sin(X) - V \cos(X))$$

wechselt und daß Modulatoreinrichtungen vorgesehen sind zum Modulieren eines zweiten Bezugssignals der Frequenz $f_t$ mit dem Basisband-Farbsignal zur Erzeugung des Zwischen-Farbhilfsträgers.

23. Anordnung nach Ansprüchen 18 und 19 oder 21 und 22, <u>dadurch gekennzeichnet,</u> daß die Modulationseinrichtungen Einsetzvorrichtungen für Farbburstsignale in die Horizontal-Austastlücken des Zwischen-Farbhilfsträgers enthalten, wobei die Farbburstsignale die Frequenz $f_t$ besitzen und sich im wesentlichen über die Dauer der Horizontal-Austastlücken erstrecken.

24. Anordnung nach Ansprüchen 18 oder 21, <u>dadurch gekenn-zeichnet</u>, daß der Umsetzer einen Mischer enthält zum Mischen eines ersten Bezugssignals der Frequenz $f_c$ und einer zeilensequentiell zwischen $+K(90°-X)$ und $-K(90°-X)$ umgeschalteten Phase mit einem zweiten Be-zugssignal der Frequenz $f_t$, wodurch ein drittes Be-zugssignal mit den Summen- und Differenzfrequenzen von $f_c$ und $f_t$ entsteht, und ein weiterer Mischer zum Mischen des Quadratur-Farbhilfsträgers mit dem dritten Bezugssignal vorgesehen ist zur Bildung des Zwischen--Farbhilfsträgers.

25. Anordnung nach Ansprüchen 20 oder 24, <u>dadurch gekenn-zeichnet</u>, daß der Umsetzer eine Einsetzvorrichtung für Farbburstsignale der Frequenz $f_t$ in die Horizon-tal-Austastlücken des Zwischen-Farbhilfsträgers enthält.

26. Anordnung nach Anspruch 25, <u>dadurch gekennzeichnet</u>, daß die Einsetzeinrichtungen Summiereinrichtungen enthalten zum Einsetzen von Farbburstsignalen in die Horizontal-Austastlücken des Quadratur-Farbträgers der dem Mischer zugeführt wird, wobei die Farbburstsignale die Frequenz $f_c$ und eine zeilensequentiell zwischen $+K(90°-X)$ und $-K(90°-X)$ umgeschaltete Phase aufweisen.

27. Anordnung zum Umsetzen eines Farbfernsehsignals mit Farbhilfsträger in ein für PAL-Farbfernsehempfänger kompatibles Eingangssignal, wobei der Farbhilfs-

träger die Frequenz $f_t$ aufweist und zeilensequentiell mit dem Signal

$$U \sin(X) + V \cos(X) \text{ bzw.}$$
$$U \sin(X) - V \cos(X)$$

moduliert ist, gekennzeichnet durch eine Abtrenneinrichtung für den Farbhilfsträger vom restlichen Farbfernsehsignal sowie Umsetzeinrichtungen für den Farbhilfsträger in das Spezial-Farbhilfsträgersignal der Frequenz $f_c$ und einer festen Phase X, das zeilensequentiell mit dem Signal

$$K(U \sin(X) + V \cos(X)) \text{ bzw.}$$
$$K(U \sin(X) - V \cos(X))$$

amplitudenmoduliert ist, worin K = +1 für Phasenwinkel zwischen $0^o$ und $90^o$ oder $180^o$ und $270^o$ und K = -1 für Phasenwinkel zwischen $180^o$ und $270^o$ oder $270^o$ und $360^o$ und außerdem durch Einrichtungen zum Summieren des Spezial-Farbhilfsträgers mit dem Basisband-Helligkeitssignal und einem frequenzmodulierten trägerfrequenten Audiosignal zur Bildung eines Spezial-Farbfernsehsignals, das ohne Verzögerungsleitung in einem PAL-Farbfernsehempfänger dekodierbar ist.

28. Anordnung nach Anspruch 27 wobei der Farbhilfsträger amplitudenmoduliert ist und die Umsetzeinrichtungen gekennzeichnet sind durch eine erste Signalquelle für ein erstes Bezugssignal der Frequenz $f_t$ und der Phase des Farbhilfsträgers, einen Mischer zum Mischen des abgetrennten Farbhilfsträgers mit dem ersten Bezugssignal zur Bildung eines zeilensequenziell zwischen den Signalformen

$$K\ (U\ \sin(X) + V\ \cos(X))\ bzw.$$
$$K\ (U\ \sin(X) - V\ \cos(X))$$

wechselnden Basisband-Farbsignals, eine zweite Signalquelle für ein zweites Bezugssignal der Frequenz $f_c$ und der Phase X, sowie durch einen AM-Modulator zum Amplitudenmodulieren des zweiten Bezugssignals mit dem Basisband-Farbsignal zur Bildung des Spezial--Farbhilfsträgersignals.

29. Anordnung nach Anspruch 27, wobei der Farbhilfsträger amplitudenmoduliert ist und die Umsetzeinrichtungen folgende Einheiten enthalten:
eine erste Signalquelle für ein erstes Bezugssignal der Frequenz $f_t$ und der Phase des Farbhilfsträgers, eine zweite Signalquelle für ein zweites Bezugssignal der Frequenz $f_c$ und der Phase X, einen Mischer zum Mischen der ersten und zweiten Bezugssignale und zur Bildung eines dritten Bezugssignals mit Summen- und Differenzfrequenzen von $f_c$ und $f_t$, sowie einen wei-teren Mischer zum Mischen des abgetrennten Farbhilfsträgers mit dem dritten Bezugssignal zur Erzeugung des Spezial-Farbhilfsträgersignals.

30. Anordnung nach Ansprüchen 27 und 28 oder 27 und 29, dadurch gekennzeichnet, daß der Farbhilfsträger des Farbfernsehsignals Farbburstsignale in der Horizontal-Austastlücken aufweist und daß die Umsetzeinrichtungen Einrichtungen zum Feststellen der Farb-burstsignale enthalten und daß Einrichtungen zum Phasenausgleich der Phase der Farbburstsignale mit der Phase des ersten Bezugssignals vorgesehen sind.

31. Anordnung nach Anspruch 12, dadurch gekennzeichnet, daß die Burstsignal-Einsetzeinrichtungen Summierein-

0010775

richtungen enthalten zum Einsetzen von Farbburstsignalen der Frequenz $f_c$ und der Phase $K(90^o-X)$
in die Horizontal-Austastlücken des Quadratur-Farbträgers.

32. Anordnung nach einem der Ansprüche 10, 12, 14, 16,
18, 21 oder 24 <u>dadurch gekennzeichnet</u>, daß außerdem
Einrichtungen zum Feststellen von Farbburstsignalen
in den Horizontal-Austastlücken des Quadratur-Farbträgers zum Erzeugen des ersten Bezugssignals
vorgesehen sind.

33. Anordnung nach einem der Ansprüche 10, 14, 18 oder
21, <u>dadurch gekennzeichnet</u>, daß die Modulatoreinrichtung für das zweite Bezugssignal einen AM-Modulator enthält.

34. Anordnung nach einem der Ansprüche 11, 14, 22 oder
23, <u>dadurch gekennzeichnet</u>, daß die Modulatoreinrichtung für das zweite Bezugssignal ferner einen
doppelsymmetrischen Modulator und die Burstsignal-
-Einsetzeinrichtungen Schaltmittel zur Aufhebung der
Symmetrie des doppelsymmetrischen Modulators während
der Horizontal-Austastlücken umfaßt, wodurch Farbburstsignale erzeugt werden, die in Frequenz und
Phase dem zweiten Bezugssignal entsprechen.

35. Anordnung nach Ansprüchen 10 und 11 oder 12 oder 14
oder 16 oder 18 oder 21, <u>dadurch gekennzeichnet</u>,
daß die Frequenz $f_t$ des zweiten Bezugssignals ein ungerades Vielfaches der halben Horizontalzeilenfrequenz ist und die Phase zeilensequentiell um $180^o$
umgeschaltet ist.

36. Anordnung nach Ansprüchen 10 und 11, oder 12 oder 14 oder 16 oder 18 oder 21, <u>dadurch gekennzeichnet</u>, daß die Frequenz $f_t$ des zweiten Bezugssignals ein ungerades Vielfaches eines Viertels der Horizontalzeilenfrequenz ist.

37. Anordnung nach den Ansprüchen 10 und 11 oder 12 oder 29, <u>dadurch gekennzeichnet</u>, daß die AM-Modulatoreinrichtung für das zweite bzw. dritte Bezugssignal Einsetzeinrichtungen für PAL-Farbburstsignale in aufeinanderfolgende Horizontalaustastlücken des Spezial-Farbhilfsträgersignals aufweist.

38. Anordnung nach den Ansprüchen 10 und 11 oder 12 oder 14 oder 16 oder 18 oder 21 oder 27, <u>dadurch gekennzeichnet</u>, daß der Phasenwinkel X als ungerades Vielfaches von $+45^{\circ}$ erzeugt wird, so daß das Spezial-Farbhilfsträgersignal in sequentiellen Horizontalzeilen mit einem Signal AM-moduliert und proportional zu (U + V) und (U − V) ist.

39. Anordnung nach einem der Ansprüche 11, 12, 15, 17, 23, 26, 28 oder 29, <u>dadurch gekennzeichnet</u>, daß die Burstsignal-Einsetzeinrichtungen so gesteuert sind, daß in ausgewählte Horizontal-Austastlücken die Burstsignale nicht eingesetzt werden, wodurch unterschieden wird, in welchen sequentiellen Zeilen ein Farbsignal enthalten ist, das eine Signalform

$$K(U \sin(X) + V \cos(X))$$

aufweist und welche Zeilen ein Farbsignal mit der Form

$$K(U \sin(X) - V \cos(X))$$

besitzt.

40. Anordnung nach Ansprüchen 10 und 11 oder 12 oder 14 oder 16 oder 18 oder 21, gekennzeichnet durch eine Einrichtung zum Zusammenfassen des Zwischen-Farbhilfsträgers mit Helligkeits- und Audio-Trägersignalen, um ein zusammengesetztes trägerfrequentes Farbfernsehsignal zwecks Speicherung im Übertragungskanal zu erzeugen und Abtrenneinrichtungen für den Zwischen-Farbhilfsträger vom übrigen Farbfernsehsignal nach dem Übertragungskanal zur Weiterleitung des Zwischen-Farbhilfsträgers.

FIG.1a

FIG.1b

0010775

FIG. 2a

0010775

FIG.2b

214 — 271 +

213

270 — 269 BP

268 — 266 +

267

264 — 296 D

295

260 — 259 ∅

258 — 254 — 257

251 — 252 — 256

249 BP — 250

277 AU — 276

248 TBEC — 212

238 — $f_t \underline{|0°}$

253

272 — 273

274

$f_c \underline{|+45°} \pm f_t \underline{|0°}$

FIG.2a)

FIG.3

FIG.4

33 543

0010775

FIG.5

FIG.6

FIG.7

Europäisches
Patentamt

**EUROPÄISCHER RECHERCHENBERICHT**

0010775
Nummer der Anmeldung

EP ...

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 1 327 060 (COMPAGNIE FRANCAISE DE TELEVISION) <br><br> * Seite 2, linke Spalte, Zeilen 16-32; Seite 2, rechte Spalte, Zeile 38 - Seite 3, linke Spalte Zeile 42 * <br><br> -- | 1,2,4, 10,32, 39 |
| | DE - A - 2 546 378 (BASF) <br><br> * Seite 5, letzter Absatz - Seite 8, Zeile 21; Seite 20; Anspruch 8 * <br><br> -- | 1,34,35 40 |
| | FR - A - 2 379 961 (BASF) <br><br> * Seite 8, Zeile 37 - Seite 11, Zeile 20; Seite 40, Zeile 1 - Seite 41, Zeile 10; Seite 41, Zeilen 21-31; Seite 42, Zeile 26 - Seite 43, Zeile 31; Seite 46, Zeile 33 - Seite 47, Zeile 7 * <br><br> & DE - A - 2 803 824 <br><br> -- | 2-8,11- 37,40 |
| 1 | DE - B - 1 148 256 (TELEFUNKEN) <br> * Spalte 5, Zeile 5 - Spalte 6, Zeile 5 * <br><br> -- | 11,13, 15,23, 25,35, 39 |
| | DE - A - 2 048 559 (SONY) <br><br> * Seite 9, letzter Absatz - Seite 10, Zeile 19 * <br><br> ---- | 36 |

**KLASSIFIKATION DER ANMELDUNG (Int.Cl. 3)**

H 04 N 9/497
H 04 N 5/76

**RECHERCHIERTE SACHGEBIETE (Int. Cl. 3)**

H 04 N 9/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 08-02-1980 | DE ROECK |

EPA form 1503.1 06.78